# EUROPÄISCHE PATENTSCHRIFT

(11) **EP 1 818 750 B1**
(45) Veröffentlichungstag und Bekanntmachung des Hinweises auf die Patenterteilung: **03.10.2012**
(21) Anmeldenummer: 07102126.5
(22) Anmeldetag: 12.02.2007
(51) Int. Cl.: G05D 16/20

(54) **Einrichtung und Verfahren zur Regelung einer Zustandsgrösse eines Prozesses**
Device and method for regulating a state variable in a process
Dispositif et procédé destinés au réglage d'une grandeur d'état d'un processus

(30) Priorität: 14.02.2006 DE 102006006697
(43) Veröffentlichungstag der Anmeldung: 15.08.2007
(73) Patentinhaber: BASF SE, 67056 Ludwigshafen (DE)
(72) Erfinder: HAGENMEYER, Veit, 68165, Mannheim (DE); HOPPE, Klaus-Dieter, 67157, Wachenheim (DE); SPECK, Thomas, 67117, Limburgerhof (DE); GRAMS, Joachim, 64658 Fürth (DE)

(56) Entgegenhaltungen:
- US-A- 5 848 609
- US-A1- 2005 004 687
- SCHULER H ET AL: "Split-Range-Regelung" 1. Januar 1999 (1999-01-01), PROZESSFUEHRUNG, OLDENBURG VERLAG, DE, PAGE(S) 196 - 197 , XP008122738 * das ganze Dokument *

## Beschreibung

Die Erfindung betrifft Einrichtungen und Verfahren zur Regelung einer Zustandsgröße eines Prozesses, insbesondere zur Regelung eines Drucks oder eines Differenzdrucks unter Verwendung eines Feinstellglieds und eines Grobstellglieds.

Viele verfahrenstechnische Prozesse erfordern die Regelung von Zustandsgrößen wie Temperatur oder Druck. Ein solcher Prozess ist beispielsweise die Chloralkalielektrolyse. Zur Herstellung von Chlor, Natronlauge und Wasserstoff ist unter anderem das Membranverfahren im Einsatz, bei dem Kathoden- und Anodenraum durch eine lonenleitende Membran getrennt sind. In einer wässrigen Lösung von Natriumchlorid wird anodisch Chlor erzeugt. Die sogenannte lonenaustauschermembran lässt ausschließlich Natriumionen (Kationen) und keine Chloridionen (Anionen) passieren. Im Katholyten entsteht neben Wasserstoff eine hochreine Natronlauge. Zum Schutz der eingesetzten Membran wird dabei üblicherweise der Differenzdruck zwischen Chlor im Anodenraum und Wasserstoff im Kathodenraum geregelt.

Ein im Stand der Technik bekanntes Regelungsverfahren ist die sogenannte Split-Range-Regelung, die beispielsweise in H. Schuler: "Prozessführung", R. Oldenbourg Verlag (1999), 196 bis 197 beschrieben ist. Dabei kommen mehrere Stellgrößen zur Beeinflussung des Prozessverhaltens als Regelgrößen zum Einsatz, wobei die Stellgrößen unterschiedlichen physikalischen Charakter besitzen, so dass sie nur in bestimmten Wertebereichen ("Ranges") verstellt werden können. Der gesamte Stellbereich wird dann auf die Bereiche der einzelnen Stellgrößen aufgeteilt ("Split Range"). Abhängig vom geforderten Stellwert kommt nur diejenige Stellgröße zum Einsatz, in deren Arbeitsbereich die Vorgabe liegt. An den Grenzen der Arbeitsbereiche erfolgt eine Umschaltung zwischen den Stellgrößen. Split-Range-Regelungen werden zum Beispiel bei der Temperaturregelung von Reaktoren eingesetzt. Heißwasser im Reaktormantel dient dabei zum Aufheizen des Reaktors bis zum Anspringen einer exothermen Reaktion in dem Reaktor, woraufhin die entstehende Reaktionswärme über Kühlwasser im Reaktormantel abgeführt wird.

Bei dem Einsatz des Split-Range-Verfahrens zur Regelung eines Differenzdrucks bei einem Membranverfahren zur Chloralkalielektrolyse mittels zweier verschieden großer Regelventile (z.B. auf der Chlorseite) ergaben sich jedoch für die Stellzeiten der beiden Regelventile Bedingungen, deren Einhaltung problematisch war. Es war nicht möglich, den verwendeten Split-Range-Regler so zu parametrieren, dass in einem für die Regelung günstigen Überlappungsbereich beide Regelventile gleichzeitig arbeiten konnten. Deshalb mussten die Bereiche so gewählt werden, dass das kleine Regelventil nur noch zum Anfahren genutzt werden konnte und nach dessen vollständiger Öffnung das große Regelventil zur Regelung des Drucks zum Einsatz kam. Da das große Regelventil durch den größeren Leitungsquerschnitt nur bedingt genau stellen konnte, musste ein sehr langsamer Parametersatz des Reglers in diesem Bereich gewählt werden, der jedoch nicht möglichen Störszenarien gewachsen war.

Die Stelleinrichtungen verfahrenstechnischer Prozesse werden üblicherweise für die maximale Last ausgelegt. Beim Anfahren des Prozesses oder bei kleiner Last werden die Stelleinrichtungen im unteren Bereich an der Grenze ihrer Regelbarkeit betrieben. Im Extremfall ist eine Regelung in diesem Bereich nicht mehr möglich. Zur Lösung dieses Problems werden im Stand der Technik zum Beispiel Regelschaltungen zur Grob-Feinregelung mit GAP-Vermaschung vorgeschlagen (K. Breckner: "Regel- und Rechenschaltungen in der Prozessautomatisierung", R. Oldenbourg Verlag (1999), 18 bis 23). Dabei werden zwei Stellglieder unterschiedlicher Größe (zum Beispiel im Verhältnis 1 : 10) verwendet, durch die der Prozess im gesamten Lastbereich geregelt werden kann. Hierzu werden ein erster Regelkreis für eine Feinregelung, welcher das kleinere Feinstellglied betätigt, und ein zweiter Regelkreis für eine Grobregelung, welcher das größere Grobstellglied betätigt, über einen GAP-Regler (Totzonen-Regler) miteinander vermascht.

Die GAP-Funktion wird durch Nachführen des Sollwerts durch den Istwert, genannt x-tracking und Speicherung des Arbeitspunkts durch Unterbrechung der Integration, realisiert. Innerhalb einer einstellbaren Totzone zwischen xₘᵢₙ und xₘₐₓ ist der Sollwert w gleich dem Istwert x. Ausgehend von der Reglergleichung y = Kₚ(x-w)+y₀ ist bei w = x, die Regelabweichung x_{w}=x-w=0 und der Reglerausgang y gleich dem Arbeitspunkt y₀, y = y₀.

Sobald x < xₘᵢₙ wird das x-tracking unterbrochen, der Sollwert auf w₁ festgehalten und die Integration der negativen Regelabweichung -x_{w} freigegeben. Ausgehend vom letzten Arbeitspunkt fällt dadurch der Reglerausgang y. Sinngemäß entsteht bei x > xₘₐₓ und dem Sollwert w₂ eine positive Regelabweichung +x_{w} und der Reglerausgang steigt.

Zur Realisierung der Fein-Grobregelung wird das Stellsignal des Feinreglers gleichzeitig mit dem kleinen Stellglied und dem Istwert des GAP-Reglers verbunden. Die GAP-Grenzen xₘᵢₙ und xₘₐₓ werden entsprechend des gewünschten Stellbereichs (zum Beispiel 10 % und 90 %) des kleinen Stellglieds eingestellt. Innerhalb dieser Grenzen werden die Störungen im Prozess allein durch den Feinregler ausgeregelt.

Sobald das Stellsignal y des Feinreglers den unteren beziehungsweise oberen Wert des Stellbereichs erreicht, wird am GAP-Regler die eingestellte Totzone überschritten, das x-tracking unterbrochen und durch Freigabe der Integration das Stellsignal verändert. Das Stellsignal des GAP-Reglers wird mit dem Sollwert des Grobreglers, welcher das große Stellglied bedient, oder direkt mit dem großen Stellglied verbunden.

Durch das Eingreifen des großen Stellglieds ändert sich der Istwert des Feinreglers. Der Regler verkleinert oder vergrößert abhängig von der anstehenden Regelabweichung sein Stellsignal. Wenn das Stellsignal einen Wert entsprechend xₘᵢₙ beziehungsweise xₘₐₓ am GAP-Regler erreicht, setzt an diesem das x-tracking ein und das gerade anstehende Stellsignal wird gespeichert. Die Regelung wird erneut vom Feinregler allein durchgeführt. Der Grobregler stellt nur einen Lastbereich zur Verfügung, in dessen Umgebung der Feinregler dann arbeitet.

Aufgabe der vorliegenden Erfindung ist es, die Nachteile des Stands der Technik zu vermeiden und eine Regelungseinrichtung und ein Regelungsverfahren basierend auf einer Grob- und einer Feinregelung, insbesondere zur Regelung eines Drucks, bereitzustellen, die sich durch ein verbessertes Regelverhalten auszeichnen. Vorzugsweise soll eine Regelung bereitgestellt werden, die stabil, sicher, präzise und schnell ist, insbesondere beim Anfahren oder Abschalten eines verfahrenstechnischen Prozesses.

Diese Aufgabe wird erfindungsgemäß gelöst durch eine Einrichtung zur Regelung einer Zustandsgröße eines Prozesses, enthaltend
- einen Feinregler, durch den aus einem Vergleich zwischen einer ersten Führungsgröße (w₁) und einer ersten Regelgröße (x₁) eine erste Stellgröße (y₁) ermittelbar ist, wobei die erste Regelgröße (x₁) von einem gemessenen Wert der zu regelnden Zustandsgröße abhängig ist und die erste Führungsgröße (w₁) einen Sollwert für die zu regelnde Zustandsgröße vorgibt,
- einen Grobregler, durch den aus einem Vergleich zwischen einer zweiten Führungsgröße (w₂) und einer zweiten Regelgröße (x₂) eine zweite Stellgröße (y₂) ermittelbar ist, wobei die erste Stellgröße (y₁) oder eine von der ersten Stellgröße (y₁) abhängige Größe (y₁') dem Grobregler als zweite Regelgröße (x₂) zuführbar ist und die zweite Führungsgröße (w₂) einen Sollzustand eines Feinstellglieds vorgibt und
- das Feinstellglied, dem die erste Stellgröße (y₁) zuführbar ist und ein Grobstellglied, dem die zweite Stellgröße (y₂) zuführbar ist, wobei mittels des Feinstellglieds und mittels des Grobstellglieds die zu regelnde Zustandsgröße beeinflussbar ist.

Die erfindungsgemäße Einrichtung kann zum Beispiel zur Regelung eines Drucks oder einer Temperatur eingesetzt werden. Weiterhin kann sie z.B. für Durchflussregelungen, Standregelungen, Konzentrationsregelungen oder hochgenaue Mengendosierungsregelungen eingesetzt werden.

Die erfindungsgemäße Einrichtung weist einen Feinregler und einen Grobregler auf, die jeweils eine Stellgröße für ein Feinstellglied beziehungsweise für ein Grobstellglied bereitstellen. Ein Feinstellglied und ein Grobstellglied sind im Zusammenhang mit der vorliegenden Erfindung zwei Stellgeräte (eventuell unterschiedlicher Größe), die die zu regelnde Zustandsgröße (eventuell unterschiedlich stark) beeinflussen können. Ein Feinstellglied und ein Grobstellglied sind zum Beispiel zwei verschieden große Ventile zur Druckregelung eines Gases, die in einem bestimmten Zeitintervall Druckänderungen in einem beispielhaften Verhältnis von 1 (Feinstellglied) zu 10 (Grobstellglied) bewirken können. Im Zusammenhang mit der Erfindung steht der Begriff "Ventil" für alle möglichen Regelorgane (Stellglieder) an Rohrleitungen wie z.B. Ventile, Klappen, Schieber etc.. Als Stellglieder (ggf. verschiedener Größe) sind jedoch auch beliebige andere Armaturen, Pumpen oder sonstige Regelkomponenten erfindungsgemäß einsetzbar.

Der Feinregler vergleicht die erste Führungsgröße (w₁), die einen Sollwert für die zu regelnde Zustandsgröße vorgibt, mit einer ersten Regelgröße (x₁), die von einem gemessenen Wert der zu regelnden Zustandsgröße abhängig ist, und ermittelt daraus die erste Stellgröße (y₁), die dem Feinstellglied zuführbar ist. Der durch die erste Führungsgröße vorgegebene Sollwert für die zu regelnde Zustandsgröße kann dabei konstant oder zeitveränderlich sein. Insbesondere kann der durch die erste Führungsgröße vorgegebene Sollwert für die zu regelnde Zustandsgröße einer externen Funktion folgen.

Beispielsweise vergleicht ein Feinregler zur Regelung eines Drucks einen Druck-Istwert (erste Regelgröße (x₁)) mit einem Druck-Sollwert (erste Führungsgröße (w₁)), ermittelt daraus eine Stellgröße (erste Stellgröße (y₁)) und gibt diese über einen Ventilstellungsregler oder direkt an ein Ventil (Feinstellglied) ab, woraufhin dieses über die aus der Stellgröße resultierende Ventilstellung den zu regelnden Druck beeinflusst.

Der Grobregler vergleicht die zweite Führungsgröße (w₂), die einen Sollzustand des Feinstellglieds vorgibt, mit einer zweiten Regelgröße (x₂) und ermittelt daraus eine zweite Stellgröße (y₂), die dem Grobstellglied zuführbar ist. Die zweite Regelgröße (x₂) entspricht dabei entweder der ersten Stellgröße (y₁), die der Feinregler ermittelt hat, oder einer von der ersten Stellgröße (y₁) abhängigen Größe (y₁'), die sich zum Beispiel aus einem Vergleich der ersten Stellgröße (y₁) und einer gemessenen Istzustandsgröße des Feinstellglieds ergibt. Durch diese Wahl der zweiten Regelgröße (x₂) und der zweiten Führungsgröße (w₂) wird der Istzustand des Feinstellglieds mittels der Regelung des Grobstellglieds beeinflusst und kann daher auf eine optimale Last eingestellt werden.

Beispielsweise vergleicht ein Grobregler zur Regelung eines Drucks einen Stellungs-Istwert eines als Feinstellglied vorgesehenen ersten Ventils (von der ersten Stellgröße (y₁) abhängige Größe (y₁') = zweite Regelgröße (x₂)) mit einem Stellungs-Sollwert des ersten Ventils (zweite Führungsgröße (w₂)) und ermittelt daraus eine Stellgröße (zweite Stellgröße (y₂)). Die zweite Stellgröße (y₂) wird über einen Ventilstellungsregler oder direkt an ein zweites (eventuell größeres) Ventil (Grobstellglied) weitergegeben, woraufhin dieses über die aus der zweiten Stellgröße resultierende Ventilstellung den zu regelnden Druck beeinflusst. Das zweite Ventil beeinflusst den zu regelnden Druck aufgrund der gewählten Regelstruktur so, dass die Ventilstellung des ersten Ventils stets in eine Stellung entsprechend dem als zweite Führungsgröße vorgegebenen Stellungs-Sollwert gebracht wird. Es kann zum Beispiel eine optimale Stellung des ersten Ventils von 50 % geöffnet vorgegeben werden.

Die Erfindung bezieht sich weiterhin auf ein Verfahren zur Regelung einer Zustandsgröße eines Prozesses, umfassend die Schritte
- Ermitteln einer ersten Stellgröße (y₁) durch einen Feinregler aus einem Vergleich zwischen einer ersten Führungsgröße (w₁), die einen Sollwert für die zu regelnde Zustandsgröße vorgibt, und einer ersten Regelgröße (x₁), die von einem gemessenen Wert der zu regelnden Zustandsgröße abhängig ist,
- Ermitteln einer zweiten Stellgröße (y₂) durch einen Grobregler aus einem Vergleich zwischen einer zweiten Führungsgröße (w₂), die einen Sollzustand eines Feinstellglieds vorgibt, und einer zweiten Regelgröße (x₂), wobei die erste Stellgröße (y₁) oder eine von der ersten Stellgröße (y₁) abhängige Größe (y₁') dem Grobregler als zweite Regelgröße (x₂) zugeführt wird und
- Zuführen der ersten Stellgröße (y₁) zu dem Feinstellglied und Zuführen der zweiten Stellgröße (y₂) zu einem Grobstellglied zum Beeinflussen der zu regelnden Zustandsgröße.

Die erfindungsgemäße Einrichtung und das erfindungsgemäße Verfahren haben den Vorteil, dass beide Stellglieder (Feinstellglied und Grobstellglied) ständig zur Regelung der Zustandsgröße im Eingriff sind. Es gibt keine Verzögerungen im Antrieb und keine Unstetigkeiten in der Gesamtregelung. Der (ggf. kleinere) Feinregler übernimmt die Regelung der Zustandsgröße und kann schnell auf Veränderungen reagieren. Das Feinstellglied arbeitet immer im Bereich einer vorgewählten (vorzugsweise optimierten) Einstellung und deshalb mit einem guten Regelverhalten. Das (ggf. größere) Grobstellglied fährt langsamer und führt das Feinstellglied bei großen Lastschwankungen immer wieder zu der vorgewählten (vorzugsweise optimierten) Einstellung zurück.

Gemäß einer bevorzugten Ausführungsform der vorliegenden Erfindung weist der Grobregler ein dynamisches Übertragungsverhalten auf, das so gewählt ist, dass eine langsamere Regelung erfolgt, wenn die zweite Regelgröße (x₂) in einem definierten Wertebereich um die zweite Führungsgröße (w₂) liegt, und eine schnellere Regelung erfolgt, wenn die zweite Regelgröße (x₂) außerhalb des Wertebereichs liegt. Das Übertragungsverhalten kann dabei linear oder nicht linear sein. Im linearen Fall kann zum Beispiel eine erste Übertragungsfunktion für Werte von zweiten Regelgrößen innerhalb des definierten Wertebereichs um die zweite Führungsgröße und eine zweite Übertragungsfunktion für Werte von zweiten Regelgrößen außerhalb des Wertebereichs vorgegeben sein. Ein Vorteil eines so gewählten Übertragungsverhaltens des Grobreglers mit verschiedenen Regelungsgeschwindigkeiten in Abhängigkeit von dem aktuellen Wert der zweiten Regelgröße ist, dass bei kleineren Schwankungen der zweiten Regelgröße (x₂), also ersten Stellgröße (y₁) oder der davon abhängigen Größe (y₁'), innerhalb des definierten Wertebereichs um die zweite Führungsgröße (w₂), der Grobregelkreis unempfindlicher ist und bei größeren Schwankungen außerhalb des Wertebereichs der Grobregelkreis empfindlicher ist und daher schneller reagiert. Durch einen entsprechend gewählten Wertebereich und die jeweils entsprechenden Übertragungsverhalten kann ein Schwingen, das den Wertebereich hinsichtlich der Amplituden ständig überschreitet, vermieden werden, bei gleichzeitiger stabiler Erreichbarkeit der zweiten Führungsgröße (w₂).

Als zweite Regelgröße (x₂) wird bei der vorliegenden Erfindung die von dem Feinregler ermittelte erste Stellgröße (y₁) oder eine von der ersten Stellgröße (y₁) abhängige Größe (y₁') dem Grobregler zugeführt. Vorzugsweise ist die von der ersten Stellgröße (y₁) abhängige Größe (y₁') eine gemessene Istzustandsgröße des Feinstellglieds oder eine durch Verknüpfung einer gemessenen Istzustandsgröße des Feinstellglieds mit der ersten Stellgröße (x₁) ermittelte Größe. Eine gemessene Istzustandsgröße ist zum Beispiel die tatsächliche aktuelle Ventilstellung eines als Feinstellglied zur Druckregelung vorgesehenen (eventuell kleineren) Ventils, das durch den Feinregler geregelt wird. Die gemessene Istzustandsgröße kann direkt dem Grobregler als zweite Regelgröße (x₂) zugeführt werden oder eine von der ersten Stellgröße abhängige Größe (y₁') kann durch Verknüpfung der gemessenen Istzustandsgröße mit der ersten Stellgröße ermittelt und diese dann dem Grobregler als zweite Regelgröße (x₂) zugeführt werden. Die Verknüpfung kann zum Beispiel einen Vergleich der gemessenen Istzustandsgröße mit der ersten Stellgröße und/oder eine Mittelwertbildung aus der gemessenen Istzustandsgröße und der ersten Stellgröße umfassen. Damit ist es z.B. möglich, größere Differenzen zwischen (y₁) und (y₁') - z.B. bedingt durch erhöhte Haft- bzw. Gleitreibung des Ventils - zu erfassen und entsprechend seitens des Grobreglers die gemessene Istzustandsgröße des Feinstellglieds (y₁') als zu regelnde Größe zu berücksichtigen.

Gemäß einer bevorzugten Ausführungsform der vorliegenden Erfindung sind das Feinstellglied und das Grobstellglied Regelventile mit regelbaren Ventilstellungen zum Regeln eines Drucks. Dabei kann die zweite Führungsgröße (w₂) so gewählt sein, dass für das als Feinstellglied vorgesehene erste Regelventil eine Sollventilstellung zwischen 5 und 99 % geöffnet, bevorzugt zwischen 40 und 60 % geöffnet, insbesondere von 50 % geöffnet vorgegeben ist. Die als Feinstellglied und Grobstellglied bei einer Ausführungsform der vorliegenden Erfindung vorgesehenen Regelventile können jeweils einen zugeordneten Stellungsregler aufweisen, dem als Führungsgröße die erste Stellgröße (y₁) beziehungsweise die zweite Stellgröße (y₂) zuführbar ist. Der Stellungsregler kann dann aus einem Vergleich zwischen der als Führungsgröße vorgegebenen Stellgröße (y₁ beziehungsweise y₂) und einer von der gemessenen aktuellen Ventilstellung abhängigen Regelgröße eine Stellgröße ermitteln, die dem Ventil als Eingangsgröße zugeführt wird und dadurch die Ventilstellung beeinflusst.

Die Erfindung bezieht sich weiterhin auf eine Einrichtung zur Regelung des Drucks (P) in einem Prozess, umfassend
- einen Feinregler, durch den aus einem Vergleich zwischen einer ersten Führungsgröße (W₁) und einer ersten Regelgröße (X₁) eine erste Stellgröße (Y₁) ermittelbar ist, wobei die erste Regelgröße (X₁) von einem gemessenen Wert des zu regelnden Drucks (P) abhängig ist und die erste Führungsgröße (W₁) einen Sollwert für den zu regelnden Druck (P) vorgibt,
- einen Zonenregler, dem die erste Stellgröße (Y₁) oder eine von der ersten Stellgröße (Y₁) abhängige Größe (Y₁') zuführbar ist und mit dem in Abhängigkeit von der ersten Stellgröße (Y₁) oder der von der ersten Stellgröße (Y₁) abhängigen Größe (Y₁') eine zweite Stellgröße (Y₂) ermittelbar ist, wobei der Zonenregler für erste Stellgrößen (Y₁) oder von ersten Stellgrößen (Y₁) abhängige Größen (Y₁') innerhalb einer Zone zwischen einer vorgegebenen minimalen ersten Größe (Y₁^{min}) und einer vorgegebenen maximalen ersten Größe (Y₁^{max}) ein Zonen-Übertragungsverhalten aufweist, das sich von einem weiteren Übertragungsverhalten für erste Stellgrößen (Y₁) oder von ersten Stellgrößen (Y₁) abhängige Größen (Y₁') außerhalb der Zone unterscheidet,
- gegebenenfalls einen Grobregler, durch den aus einem Vergleich zwischen einer zweiten Führungsgröße (W₂) und einer zweiten Regelgröße (X₂) eine dritte Stellgröße (Y₃) ermittelbar ist, wobei die zweite Stellgröße (Y₂) dem Grobregler als zweite Führungsgröße (W₂) zuführbar ist und die zweite Regelgröße (X₂) eine gemessene Größe (X_{gem}) ist, durch die der zu regelnde Druck (P) beeinflussbar ist, und
- ein Feinstellglied, dem die erste Stellgröße (Y₁) zuführbar ist und ein Grobstellglied, dem die zweite Stellgröße (Y₂) oder die dritte Stellgröße (Y₃) zuführbar ist, wobei mittels des Feinstellglieds und mittels des Grobstellglieds der zu regelnde Druck (P) beeinflussbar ist.

Diese erfindungsgemäße Einrichtung weist einen Feinregler, einen Zonenregler und gegebenenfalls einen Grobregler auf, die zwei Stellgrößen, eine für ein Feinstellglied und eine für ein Grobstellglied bereitstellen. Falls ein Grobregler vorhanden ist, ermittelt dieser eine Stellgröße für das Grobstellglied, ansonsten stellt der Zonenregler die Stellgröße für das Grobstellglied bereit.

Der Feinregler vergleicht die erste Führungsgröße (W₁), die einen Sollwert für den zu regelnden Druck vorgibt, mit einer ersten Regelgröße (X₁), die von einem gemessenen Wert des zu regelnden Drucks abhängig ist, und ermittelt daraus die erste Stellgröße (Y₁), die dem Feinstellglied zuführbar ist. Der durch die erste Führungsgröße für den zu regelnden Druck vorgegebene Sollwert kann dabei konstant oder zeitveränderlich sein. Insbesondere kann der durch die erste Führungsgröße für den zu regelnden Druck vorgegebene Sollwert einer externen Funktion folgen.

Beispielsweise vergleicht der Feinregler der erfindungsgemäßen Einrichtung einen Druck-Istwert (erste Regelgröße) mit einem Druck-Sollwert (erste Führungsgröße), ermittelt daraus eine Stellgröße (erste Stellgröße) und gibt diese über einen Ventilstellungsregler oder direkt an ein Ventil (Feinstellglied) ab, woraufhin das Ventil über die aus der Stellgröße resultierende Ventilstellung den zu regelnden Druck beeinflusst.

Der Zonenregler ermittelt aus der von dem Feinregler bestimmten ersten Stellgröße (Y₁) oder aus einer von der ersten Stellgröße (Y₁) abhängigen Größe (Y₁') eine zweite Stellgröße (Y₂). Das Übertragungsverhalten des Zonenreglers unterscheidet sich in Abhängigkeit davon, ob die erste Stellgröße (Y₁) (oder die von der ersten Stellgröße abhängige Größe (Y₁')) innerhalb oder außerhalb einer Zone liegt, die von einer vorgegebenen minimalen ersten Größe (Y₁^{min}) und einer vorgegebenen maximalen ersten Größe (Y₁^{max}) begrenzt wird. Das Übertragungsverhalten kann dabei linear oder nicht linear sein.

Vorzugsweise ist die von der ersten Stellgröße (Y₁) abhängige Größe (Y₁') eine gemessene Istzustandsgröße des Feinstellglieds oder eine durch Verknüpfung einer gemessenen Istzustandsgröße des Feinstellglieds mit der ersten Stellgröße (Y₁) ermittelte Größe. Eine gemessene Istzustandsgröße ist zum Beispiel die tatsächliche aktuelle Ventilstellung eines als Feinstellglied zur Druckregelung vorgesehenen kleineren Ventils, das durch den Feinregler geregelt wird. Die gemessene Istzustandsgröße kann direkt dem Zonenregler zugeführt werden oder eine von der ersten Stellgröße abhängige Größe (Y₁') kann durch Verknüpfung der gemessenen Istzustandsgröße mit der ersten Stellgröße ermittelt und diese dann dem Zonenregler zugeführt werden. Die Verknüpfung kann zum Beispiel ein Vergleich der gemessenen Istzustandsgröße mit der ersten Stellgröße und/oder eine Mittelwertbildung aus der gemessenen Istzustandsgröße und der ersten Stellgröße umfassen. Damit ist es z.B. möglich, größere Differenzen zwischen (Y₁) und (Y₁') - z.B. bedingt durch erhöhte Haft- bzw. Gleitreibung des Ventils - zu erfassen und entsprechend seitens des Grobreglers die gemessene Istzustandsgröße des Feinstellglieds (Y₁') als zu regelnde Größe zu berücksichtigen.

Beispielsweise kann der Zonenregler der erfindungsgemäßen Einrichtung zur Regelung eines Drucks ein Totzonenregler (GAP-Regler) sein, bei dem für erste Stellgrößen (Y₁) oder von ersten Stellgrößen (Y₁) abhängige Größen (Y₁'), die innerhalb einer Totzone zwischen einer vorgegebenen minimalen ersten Größe (Y₁^{min}) und einer vorgegebenen maximalen ersten Größe (Y₁^{max}) liegen, eine zweite Stellgröße (Y₂) ermittelt wird, die keine Änderung des Zustands des Grobstellglieds hervorruft. Die Zone zwischen der vorgegebenen minimalen und der vorgegebenen maximalen Größe (Y₁^{min} - Y₁^{maX}) ist dabei eine sogenannte Totzone, in der ein Nachführen des Sollwerts durch den Istwert erfolgt (sogenanntes "x-tracking"). Der Reglerausgang (Y₂) ist dann gleich dem aktuellen Arbeitspunkt, so dass keine Änderung des Zustands des Grobstellglieds hervorgerufen wird (zum Beispiel keine Änderung der Ventilstellung eines (eventuell größeren) Ventils zur Druckregelung). Wenn die am Reglereingang anliegende erste Stellgröße (Y₁) oder die von der ersten Stellgröße abhängige Größe (Y₁') außerhalb der Totzone liegt, wird das x-Tracking unterbrochen und der Totzonenregler weist ein Übertragungsverhalten auf, woraus sich eine zweite Stellgröße (Y₂) ergibt, aus der eine Änderung der aktuellen Einstellung des Grobstellglieds resultiert und die somit eine Druckänderung hervorruft.

Mögliche andere Zonenregler definieren unterschiedliche Übertragungsverhalten innerhalb und außerhalb der Zone. Dabei wird vorzugsweise das Verhalten innerhalb der Zone langsam und außerhalb der Zone schnell gewählt. Die Sollwertbehandlung ist beim Zonenregler in jedem Falle vom aktuellen Wert der ersten Stellgröße (Y₁) oder einer von der ersten Stellgröße (Y₁) abhängigen Größe (Y₁') und den vorgegebenen minimalen und maximalen Größen (Y₁^{min} und Y₁^{max}) abhängig. Beispielsweise kann beim Überschreiten der minimalen Größe (Y₁^{min}) dieser Wert (Y₁^{min}) so lange als Sollwert definiert sein, bis die maximale Größe (Y₁^{max}) überschritten wird oder umgekehrt. Ferner kann z.B. außerhalb der Zone die jeweils betragsmäßig nähere Größe der Zonengrenzwerte (Y₁^{min} bzw. Y₁^{max}) und innerhalb der Zone der Mittelwert der Zonengrenzwerte ((Y₁^{min} + Y₁^{max})/2) als Sollwert gelten. Dem Fachmann ist eine Vielzahl von Möglichkeiten der Sollwertbehandlung bekannt.

Falls bei der erfindungsgemäßen Einrichtung mit Zonenregler ein Grobregler vorhanden ist, so vergleicht dieser die zweite Führungsgröße (W₂), die der von dem Zonenregler ermittelten zweiten Stellgröße (Y₂) entspricht, mit einer zweiten Regelgröße (X₂) und ermittelt daraus eine dritte Stellgröße (Y₃). Die zweite Regelgröße entspricht dabei einer gemessenen Größe (X_{gem}), durch die der zu regelnde Druck (P) beeinflussbar ist. Eine solche gemessene Größe kann beispielsweise ein von der Ventilstellung eines als Grobstellglied vorgesehenen Ventils abhängiges Signal, die Temperatur einer Einrichtung, die den Druck über Temperaturänderungen beeinflusst, die Strömungsgeschwindigkeit eines zur Druckänderung zu- oder abgeführten Gases oder der Strom bei einer Elektrolyse sein

Bei der erfindungsgemäßen Einrichtung mit Zonenregler wird dem Feinstellglied die von dem Feinregler ermittelte erste Stellgröße (Y₁) und dem Grobstellglied von dem Zonenregler ermittelte zweite Stellgröße (Y₂) oder die von dem Grobregler ermittelte dritte Stellgröße (Y₃) zugeführt. Vorzugsweise sind das Feinstellglied und das Grobstellglied Regelventile mit regelbaren Ventilstellungen zum Regeln eines Drucks. Die Stellgrößen können den Regelventilen direkt oder über je einen Ventilstellungsregler zugeführt werden, woraufhin der zu regelnde Druck über die aus der jeweiligen Stellgröße resultierende Ventilstellung beeinflusst wird.

Die Erfindung bezieht sich weiterhin auf ein Verfahren zur Regelung eines Drucks (P) in einem Prozess, umfassend die Schritte
- Ermitteln einer ersten Stellgröße (Y₁) durch einen Feinregler aus einem Vergleich zwischen einer ersten Führungsgröße (W₁), die einen Sollwert für den zu regelnden Druck (P) vorgibt, und einer ersten Regelgröße (X₁), die von einem gemessenen Wert des zu regelnden Drucks (P) abhängig ist,
- Ermitteln einer zweiten Stellgröße (Y₂) durch einen Zonenregler in Abhängigkeit von der ersten Stellgröße (Y₁) oder von einer von der ersten Stellgröße (Y₁) abhängige Größe (Y₁'), wobei der Zonenregler für erste Stellgrößen (Y₁) oder von ersten Stellgrößen (Y₁) abhängige Größen (Y₁') innerhalb einer Zone zwischen einer vorgegebenen minimalen ersten Größe (Y₁^{min}) und einer vorgegebenen maximalen ersten Größe (Y₁^{max}) ein Zonen-Übertragungsverhalten aufweist, das sich von einem weiteren Übertragungsverhalten für erste Stellgrößen (Y₁) oder von ersten Stellgrößen (Y₁) abhängige Größen (Y₁') außerhalb der Zone unterscheidet,
- gegebenenfalls Ermitteln einer dritten Stellgröße (Y₃) durch einen Grobregler aus einem Vergleich zwischen einer zweiten Führungsgröße (W₂) und einer zweiten Regelgröße (X₂), wobei die zweite Stellgröße (Y₂) dem Grobregler als zweite Führungsgröße (W₂) zugeführt wird und die zweite Regelgröße (X₂) eine gemessene Größe (X_{gem}) ist, durch die der zu regelnde Druck (P) beeinflussbar ist, und
- Zuführen der ersten Stellgröße (Y₁) zu einem Feinstellglied und Zuführen der zweiten Stellgröße (Y₂) oder der dritten Stellgröße (Y₃) zu dem Grobstellglied zum Beeinflussen des zu regelnden Drucks (P).

Der zu regelnde Druck kann dabei auch ein Differenzdruck sein. Das erfindungsgemäße Verfahren wird vorzugsweise unter Verwendung einer erfindungsgemäßen Einrichtung zur Regelung des Drucks durchgeführt.

Die erfindungsgemäße Einrichtung und das erfindungsgemäße Verfahren haben den Vorteil, dass beide Stellglieder (Feinstellglied und Grobstellglied) in einem optimalen Lastbereich zur Regelung des Drucks eingesetzt werden können. Das Feinstellglied übernimmt die Regelung des Drucks und kann schnell auf Veränderungen reagieren. Das Grobstellglied stellt sicher, dass die dem Feinstellglied zugeführten Stellgrößen in einem durch Wahl der Zone des Zonenreglers vorgewählten (vorzugsweise optimierten) Bereich gehalten werden. Zusätzlich kann damit ein schneller Parametersatz für die Regelung mittels des Feinstellglieds eingesetzt und somit ein gutes Stör- bzw. Führungsverhalten erreicht werden. Dies ist bei einer Split-Range-Regelung mit angestrebtem Überlappungsbereich zum gleichzeitigen Einsatz beider Stellglieder nur schwer möglich.

Gemäß einer bevorzugten Ausführungsform der vorliegenden Erfindung sind die minimale erste Stellgröße (Y₁^{min}) und die maximale erste Stellgröße (Y₁^{max}) so gewählt, dass für das Feinstellglied eine Zone in einem Intervall von 5 und 99 %, bevorzugt von 40 und 60 % vorgegeben ist. In dieser Zone werden die sich ergebenden Änderungen am Grobstellglied vorzugsweise gering gehalten.

Gemäß einer Ausführungsform der vorliegenden Erfindung ist parallel zu dem Zonenregler ein weiterer Regler geschaltet, wobei durch den weiteren Regler aus einem Vergleich zwischen einer dritten Führungsgröße (W₃) und einer dritten Regelgröße (X₃) eine vierte Stellgröße (Y₄) ermittelbar ist, wobei die dritte Führungsgröße (W₃) einen Sollzustand des Feinstellglieds vorgibt, die erste Stellgröße (Y₁) oder die von der ersten Stellgröße (Y₁) abhängige Größe (Y₁') dem weiteren Regler als dritte Regelgröße (X₃) zuführbar ist und aus der vierten Stellgröße (Y₄) und der von dem Zonenregler ermittelten zweiten Stellgröße (Y₂) eine neue zweite Stellgröße (Y₂) ermittelbar ist, die dem Grobstellglied oder gegebenenfalls dem Grobregler zuführbar ist. Der dem Zonenregler parallel geschaltete Regler ermittelt folglich aus der von dem Feinregler bereitgestellten ersten Stellgröße (Y₁) (dritte Regelgröße (X₃)) oder der von der ersten Stellgröße (Y₁) abhängigen Größe (Y₁') und der einen Sollzustand des Feinstellglieds vorgebenden dritten Führungsgröße (W₃) eine vierte Stellgröße (Y₄). Die vierte Stellgröße (Y₄) wird dann mit der am Ausgang des Zonenreglers bereitgestellten zweiten Stellgröße (Y₂) verknüpft, um eine neue zweite Stellgröße (Y₂) zu ermitteln, die dann dem Grobstellglied als Stellgröße oder gegebenenfalls einem Grobregler als zweite Führungsgröße (W₂) zuführbar ist. Der dem Zonenregler parallel geschaltete weitere Regler kann beispielsweise ein einem Totzonenregler (GAP-Regler) parallel geschalteter PID-Regler sein, der, auch wenn die erste Stellgröße (Y₁) oder die von der ersten Stellgröße abhängige Größe (Y₁') in der "Totzone" liegt, eine langsame Regelung des Grobstellglieds durchführt. Damit ist es möglich, einen speziellen Sollwert des Feinstellglieds, der innerhalb der Zone liegt (z.B. 50% geöffnet), stabil einzustellen.

Die Erfindung bezieht sich folglich auch auf ein Verfahren, bei dem ein parallel zu dem Zonenregler geschalteter weiterer Regler aus einem Vergleich zwischen einer dritten Führungsgröße (W₃) und einer dritten Regelgröße (X₃) eine vierte Stellgröße (Y₄) ermittelt, wobei die dritte Führungsgröße (W₃) einen Sollzustand des Feinstellglieds vorgibt, die erste Stellgröße (Y₁) oder die von der ersten Stellgröße (Y₁) abhängige Größe (Y₁') dem weiteren Regler als dritte Regelgröße (X₃) zugeführt wird und aus der vierten Stellgröße (Y₄) und der von dem Zonenregler ermittelten zweiten Stellgröße (Y₂) eine neue zweite Stellgröße (Y₂) ermittelt wird, die dem Grobstellglied oder ggf. dem Grobregler zugeführt wird.

Gemäß einer bevorzugten Ausführungsform der vorliegenden Erfindung wird mittels der erfindungsgemäßen Einrichtung beziehungsweise dem erfindungsgemäßen Verfahren ein Druck bei einem Membranverfahren zur Chloralkalielektrolyse geregelt. Es kann beispielsweise der Druck im Kathodenraum und/oder der Druck im Anodenraum und/oder der Differenzdruck zwischen Kathoden- und Anodenraum geregelt werden. Dazu können als Grob- und Feinstellglieder (eventuell verschieden dimensionierte) Regelventile vorgesehen sein, deren Ventilstellung geregelt wird, um eines der entstehenden Gase (Wasserstoff oder Chlor) mit einem bestimmten Volumenstrom abzuleiten.

Die Erfindung bezieht sich weiterhin auf eine Differenzdruckregelvorrichtung zur Regelung eines Differenzdrucks zwischen mindestens zwei Messorten, umfassend mindestens eine erfindungsgemäße Regeleinrichtung, die mit einem der Messorte in Verbindung steht. Die Differenzdruckregelvorrichtung dient zum Beispiel zur Regelung eines Differenzdrucks zwischen zwei in je einem (offenen oder geschlossenen) Behältnis (oder damit verbundenen Leitungen) angeordneten Messorten, wobei die zwei Behältnisse durch eine Membran voneinander getrennt sein können. Die Membran ist dabei vorzugsweise eine Ionenaustauschermembran und in den Behältnissen ist vorzugsweise eine Chloralkalielektrolyse durchführbar, bei der in dem einen Behältnis Chlor und in dem anderen Behältnis Wasserstoff entsteht, wobei mindestens eines der Behältnisse mit zwei Regelventilen mit durch die Differenzdruckregelvorrichtung regelbaren Ventilstellungen als Grobstellglied und als Feinstellglied verbunden ist, über die Chlor oder Wasserstoff abführbar ist.

Die erfindungsgemäße Differenzdruckregelvorrichtung umfasst mindestens eine der oben beschriebenen erfindungsgemäßen Regeleinrichtungen. Beispielsweise kann eine Einrichtung allein den Differenzdruck zwischen zwei Messorten regeln, indem Grob- und Feinstellglied den Druck an einem der beiden Messorte beeinflussen. Es können aber auch zwei miteinander gekoppelte erfindungsgemäße Regeleinrichtungen zur Regelung des Differenzdrucks zwischen zwei Messorten dienen, wobei je eine der Regeleinrichtungen den Druck an je einem der Messorte beeinflusst. Es kann sich dabei um zwei gleich aufgebaute Regeleinrichtungen handeln (zum Beispiel zwei erfindungsgemäße Regeleinrichtungen mit je einem Feinregler, einem Grobregler, einem Feinstellglied und einem Grobstellglied oder zwei erfindungsgemäße Regeleinrichtungen mit je einem Feinregler, einem Zonenregler, einem Feinstellglied und einem Grobstellglied). Es können jedoch ebenso zwei verschieden aufgebaute Regeleinrichtungen zur Regelung des Differenzdrucks dienen (zum Beispiel eine erfindungsgemäße Regeleinrichtung mit Feinregler, Grobregler, Feinstellglied und Grobstellglied und eine erfindungsgemäße Regeleinrichtung mit Feinregler, Zonenregler, Grobregler, Feinstellglied und Grobstellglied).

Anhand der Zeichnung wird die Erfindung nachstehend näher erläutert.

Es zeigt:
- Figur 1: ein Blockschaltbild einer ersten erfindungsgemäßen Regeleinrichtung mit einem Feinregler und einem Grobregler,
- Figur 2: ein Blockschaltbild einer ersten erfindungsgemäßen Differenzdruckregelvorrichtung mit zwei erfindungsgemäßen Regeleinrichtungen,
- Figur 3: ein Blockschaltbild einer zweiten erfindungsgemäßen Regeleinrichtung mit einem Feinregler, einem Zonenregler und einem Grobregler,
- Figur 4: ein Blockschaltbild einer dritten erfindungsgemäßen Regeleinrichtung mit einem Feinregler, einem Zonenregler, einem dem Zonenregler parallel geschalteten weiteren Regler und einem Grobregler und
- Figur 5: ein Blockschaltbild einer zweiten erfindungsgemäßen Differenzdruckregelvorrichtung mit zwei erfindungsgemäßen Regeleinrichtungen.

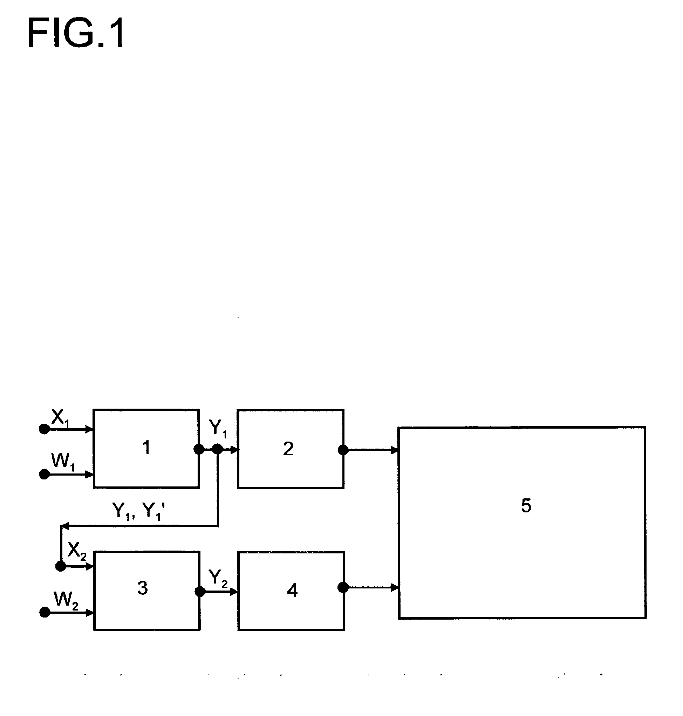

Figur 1 zeigt ein Blockschaltbild einer ersten erfindungsgemäßen Regeleinrichtung mit einem Feinregler und einem Grobregler zur Regelung einer Zustandsgröße eines Prozesses mittels eines Feinstellglieds und eines Grobstellglieds.

Am Eingang des Feinreglers 1 liegt eine erste Regelgröße x₁ und eine erste Führungsgröße w₁ an. Der Feinregler 1 ermittelt eine erste Stellgröße y₁, die dem Feinstellglied 2 zugeführt wird, das die zu regelnde Zustandsgröße des Prozesses 5 entsprechend beeinflusst. Die erste Regelgröße x₁ wird durch Messung des aktuellen Werts der zu regelnden Zustandsgröße gewonnen (nicht dargestellt) und die erste Führungsgröße w₁ gibt einen Sollwert für die zu regelnde Zustandsgröße vor.

Die erste Stellgröße y₁ oder eine von der ersten Stellgröße abhängige Größe y₁' wird ferner als zweite Regelgröße x₂ einem Grobregler 3 zugeführt. Aus einem Vergleich dieser zweiten Regelgröße x₂ mit einer zweiten Führungsgröße w₂ ermittelt der Grobregler eine zweite Stellgröße y₂. Die zweite Stellgröße y₂ wird einem Grobstellglied 4 zugeführt, das die zu regelnde Zustandsgröße des Prozesses entsprechend beeinflusst. Die zweite Führungsgröße w₂ gibt dabei einen Sollzustand des Feinstellglieds 2 vor, so dass das Feinstellglied bei einem optimalen Lastzustand betrieben werden kann. Die zu regelnde Zustandsgröße ist zum Beispiel ein Druck, der durch ein kleines Regelventil (Feinstellglied 2) und ein großes Regelventil (Grobstellglied 4) beeinflusst wird, wobei die zweite Führungsgröße w₂ eine optimale Ventilstellung (zum Beispiel 50 % geöffnet) des kleinen Regelventils vorgibt.

Der Istwert der Ventilstellung des kleineren Regelventils (Istzustand des Feinstellglieds 2) kann bei der erfindungsgemäßen Einrichtung gemessen werden und zur Ermittlung der dem Grobregler 3 zugeführten, von der ersten Stellgröße y₁ abhängigen Größe y₁' dienen. Der gemessene Istwert der Ventilstellung des kleineren Regelventils (Istzustand des Feinstellglieds 2) und/oder der gemessene Istwert der Ventilstellung des größeren Regelventils (Istzustand des Grobstellglieds 4) kann auch zur Kontrolle dienen und dazu zum Beispiel mit der Sollventilstellung verglichen werden, die sich aus der ersten Stellgröße y₁ beziehungsweise der zweiten Stellgröße y₂ ergeben sollte. Bei zu großen Abweichungen von Ist- und Sollwert kann der Prozess zum Beispiel abgeschaltet werden.

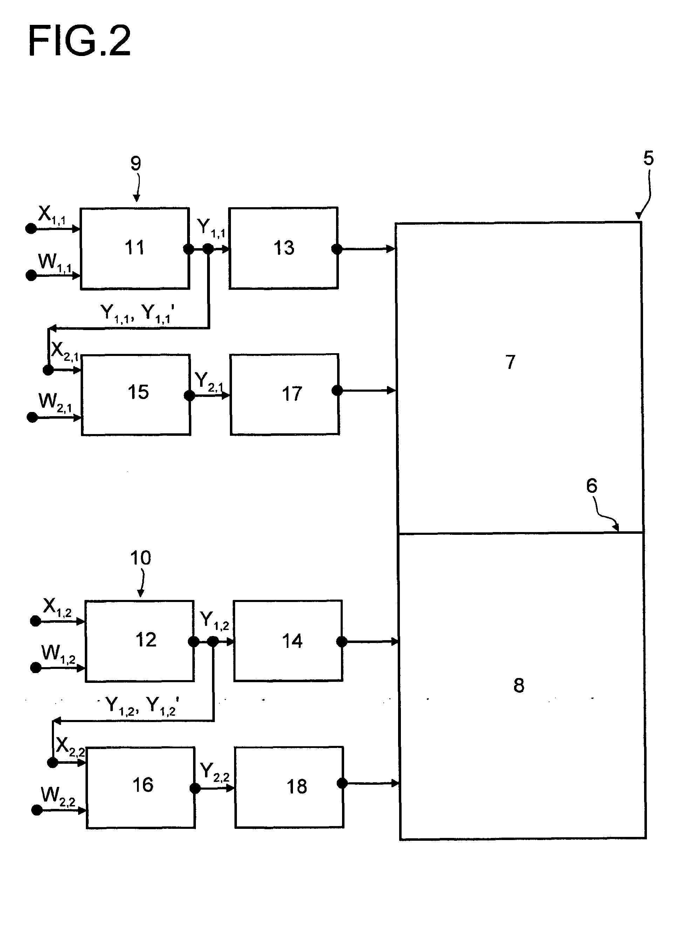

Figur 2 zeigt ein Blockschaltbild einer ersten erfindungsgemäßen Differenzdruckregelvorrichtung mit zwei erfindungsgemäßen Regeleinrichtungen gemäß Figur 1.

Der zur regelnde Prozess 5 findet dabei in zwei durch eine Membran 6 voneinander getrennten Behältnissen 7, 8 statt. Die Behältnisse 7, 8 sind vorzugsweise ein Kathodenraum und ein Anodenraum, die durch eine lonenaustauschermembran getrennt sind und zur Chloralkalielektrolyse dienen. Der Differenzdruck Δp = p₁ - p₂ zwischen den beiden Behältnissen 7, 8 (die je einen Messort zur Druckmessung enthalten) wird durch zwei im Wesentlichen gleich aufgebaute erfindungsgemäße Regeleinrichtungen 9, 10 geregelt. Beide Regeleinrichtungen 9, 10 weisen jeweils einen Feinregler 11, 12, ein Feinstellglied 13, 14, einen Grobregler 15, 16 und ein Grobstellglied 17, 18 auf. Das erste Feinstellglied 13 und das erste Grobstellglied 17 wirken auf den ersten Druck p₁ in dem ersten Behältnis 7, das zweite Feinstellglied 14 und das zweite Grobstellglied 18 wirken auf den zweiten Druck p₂ in dem zweiten Behältnis 8. Die Verknüpfung der Bestandteile der zwei Regeleinrichtungen 9, 10 (11, 13, 15, 17 beziehungsweise 12, 14, 16, 18) entspricht der in Figur 1 dargestellten.

Die Regelung des Differenzdrucks Δp zwischen den beiden Behältnissen 7, 8 sind die beiden Regeleinrichtungen 9, 10 miteinander gekoppelt (nicht dargestellt). Es besteht eine Vielzahl von Möglichkeiten, wie diese Kopplung gestaltet werden kann. Eine Möglichkeit besteht darin, dass die erste Führungsgröße w_{1, 2} des zweiten Feinreglers 12 mit der ersten Regelgröße x_{1, 1} des ersten Feinreglers 11 gekoppelt ist (zum Beispiel kann w_{1,2} : = x_{1,1} + Δpₛₒₗₗ (mit Δpₛₒₗₗ dem Sollwert für den Differenzdruck) vorgegeben werden).

Eine weitere Möglichkeit besteht darin, den Istwert des Differenzdrucks Δpᵢₛₜ = p₁ - p₂ als erste Regelgröße x_{1,2} dem zweiten Feinregler 12 und den Sollwert des Differenzdrucks Δpₛₒₗₗ als erste Führungsgröße w_{1,2} dem zweiten Feinregler 12 zuzuführen, wobei der erste Druck p₁ dem ersten Feinregler 11 als erste Regelgröße x_{1,1} zugeführt wird. Dem Fachmann ergeben sich weitere Möglichkeiten zur Kopplung der zwei Regeleinrichtungen 9, 10.

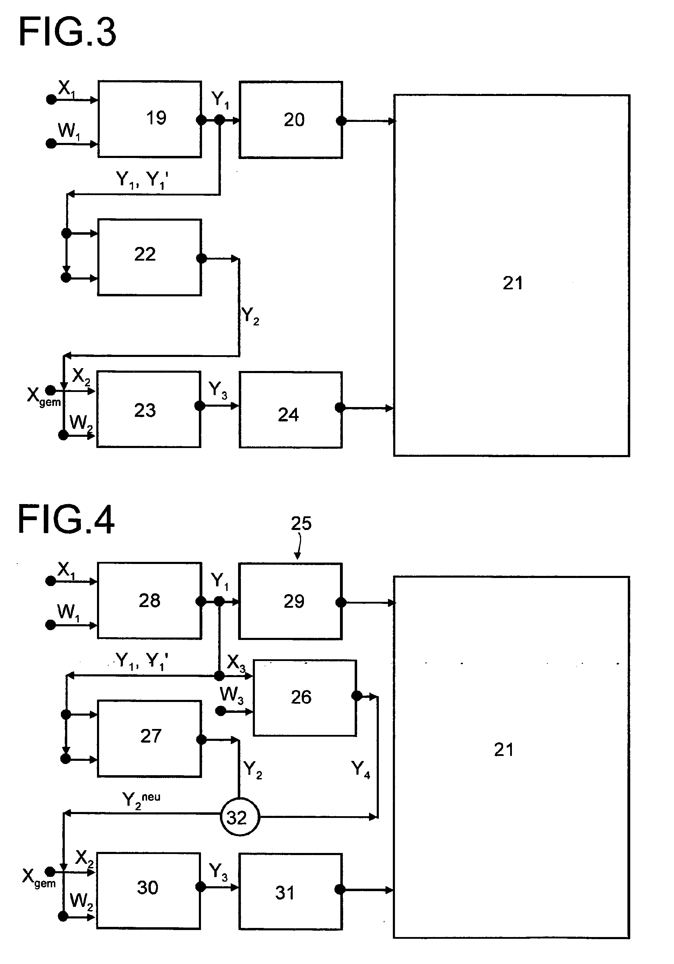

Figur 3 zeigt ein Blockschaltbild einer zweiten Regeleinrichtung mit einem Feinregler, einem Zonenregler und einem Grobregler zur Regelung des Drucks eines Prozesses mittels eines Feinstellglieds und eines Grobstellglieds.

Am Eingang des Feinreglers 19 liegt eine erste Regelgröße X₁ und eine erste Führungsgröße W₁ an. Der Feinregler ermittelt eine erste Stellgröße Y₁, die dem Feinstellglied 20 zugeführt wird, das den zu regelnden Druck P des Prozesses 21 entsprechend beeinflusst. Die erste Regelgröße X₁ wird durch Messung des aktuellen Drucks gewonnen (nicht dargestellt) und die erste Führungsgröße W₁ gibt einen Sollwert für den zu regelnden Druck vor.

Die erste Stellgröße Y₁ oder eine von der ersten Stellgröße abhängige Größe Y₁' wird ferner einem Zonenregler 22 als Eingangsgröße zugeführt. Diese Zuführung ist in Figur 3 aufgespaltet dargestellt, um die doppelte Verwendung des Signals Y₁ (bzw. Y₁') - sowohl als zu regelnde Größe als auch als Größe, mit deren Hilfe die Sollwertbehandlung gestaltet wird - darzustellen. Der Zonenregler 22 ermittelt aus der Eingangsgröße eine zweite Stellgröße Y₂. Die ermittelte zweite Stellgröße Y₂ hängt unter anderem davon ab, ob die Eingangsgröße Y₁ oder Y₁' innerhalb oder außerhalb einer vorgegebenen Zone zwischen einer minimalen ersten Größe Y₁^{min} und einer maximalen ersten Größe Y₁^{max} liegt. Der Zonenregler 22 ist beispielsweise ein GAP-Regler, bei dem Y₁^{min} und Y₁^{max} eine Totzone begrenzen.

Die zweite Stellgröße Y₂ wird einem Grobregler 23 als zweite Führungsgröße W₂ zugeführt. Aus einem Vergleich einer zweiten Regelgröße X₂ mit dieser zweiten Führungsgröße W₂ ermittelt der Grobregler 23 eine dritte Stellgröße Y₃. Die dritte Stellgröße Y₃ wird einem Grobstellglied 24 zugeführt, das den zu regelnden Druck P des Prozesses 21 entsprechend beeinflusst. Die zweite Regelgröße X₂ ist dabei eine gemessene Größe X_{gem}, durch die der zu regelnde Druck P beeinflussbar ist.

Das Feinstellglied 20 und das Grobstellglied 24 sind zum Beispiel zwei unterschiedlich große Regelventile, deren Ventilstellung zur Beeinflussung des zu regelnden Drucks P verändert wird.

Figur 4 zeigt ein Blockschaltbild einer dritten erfindungsgemäßen Regeleinrichtung zur Regelung einer Zustandsgröße, insbesondere eines Drucks, in einem Prozess.

Die Regeleinrichtung 25 ist wie die erfindungsgemäße Einrichtung gemäß Figur 3 aufgebaut (mit Feinregler 28, Feinstellglied 29, Zonenregler 27, Grobregler 30 und Grobstellglied 31), wobei zusätzlich ein weiterer Regler 26 parallel zu dem Zonenregler 27 geschaltet ist. Dem Grobregler 30 wird in dieser Ausführungsform nicht die von dem Zonenregler 27 ermittelte zweite Stellgröße Y₂ direkt als zweite Führungsgröße W₂ zugeführt, sondern es wird eine neue zweite Stellgröße Y₂^{neu} durch die Verknüpfung 32 der zweiten Stellgröße Y₂ mit einer von dem weiteren Regler 26 ermittelten vierten Stellgröße Y₄ ermittelt, die dann dem Grobregler 30 als zweite Führungsgröße W₂ zugeführt wird. Der weitere Regler 26 ermittelt die vierte Stellgröße Y₄ aus einem Vergleich der dritten Regelgröße X₃ (die der ersten Stellgröße Y₁ oder der davon abhängigen Größe Y₁' entspricht), mit einer dritten Führungsgröße W₃ (die einen Sollzustand des Feinstellglieds 29 vorgibt).

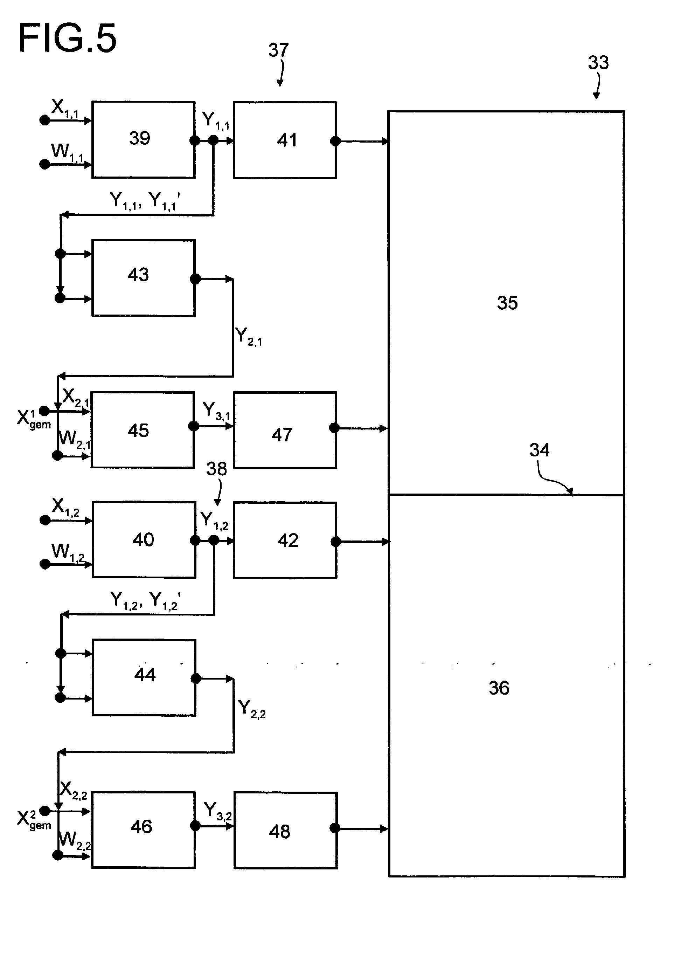

Figur 5 zeigt ein Blockschaltbild einer zweiten Differenzdruckregelvorrichtung mit zwei gleich aufgebauten erfindungsgemäßen Regeleinrichtungen gemäß Figur 3, die jeweils einen Feinregler, ein Feinstellglied, einen Zonenregler, einen Grobregler und ein Grobstellglied aufweisen.

Der zu regelnde Prozess 33 findet in zwei durch eine Membran 34 voneinander getrennten Behältnissen 35, 36 statt. Die Behältnisse 35, 36 sind vorzugsweise ein Kathodenraum und ein Anodenraum, die durch eine lonenaustauschermembran getrennt sind und zur Chloralkalielektrolyse dienen. Der Differenzdruck ΔP = P₁ - P₂ zwischen den beiden Behältnissen 35, 36 (die je einen Messort zur Druckmessung enthalten) wird durch zwei im Wesentlichen gleich aufgebaute erfindungsgemäße Regeleinrichtungen 37, 38 geregelt. Beide Regeleinrichtungen 37, 38 weisen jeweils einen Feinregler 39, 40, ein Feinstellglied 41, 42, einen Zonenregler 43, 44, einen Grobregler 45, 46 und ein Grobstellglied 47, 48 auf. Das erste Feinstellglied 41 und das erste Grobstellglied 47 wirken auf den ersten Druck P₁ in dem ersten Behältnis 35, das zweite Feinstellglied 42 und das zweite Grobstellglied 48 wirken auf den zweiten Druck P₂ in dem zweiten Behältnis 36. Die Verknüpfung der Bestandteile der zwei Regeleinrichtungen 37, 38 (39, 41, 43, 45, 47 beziehungsweise 40, 42, 44, 46, 48) entspricht der in Figur 3 dargestellten.

Zur Regelung des Differenzdrucks ΔP zwischen den beiden Behältnissen 35, 36 sind die beiden Regeleinrichtungen 37, 38 miteinander gekoppelt (nicht dargestellt). Es besteht eine Vielzahl von Möglichkeiten, wie diese Kopplung gestaltet werden kann. Eine Möglichkeit besteht darin, dass die erste Führungsgröße W_{1,2} des zweiten Feinreglers 40 mit der ersten Regelgröße X_{1,1} des ersten Feinreglers 39 gekoppelt ist (zum Beispiel kann W_{1,2} : = X_{1,1} + ΔPₛₒₗₗ (mit ΔPₛₒₗₗ dem Sollwert für den Differenzdruck) vorgegeben werden). Eine weitere Möglichkeit besteht darin, den Istwert des Differenzdrucks ΔPᵢₛₜ = P₁ - P₂ als erste Regelgröße X_{1,2} dem zweiten Feinregler 40 und den Sollwert des Differenzdrucks ΔPₛₒₗₗ als erste Führungsgröße W_{1,2} dem zweiten Feinregler 40 zuzuführen, wobei der erste Druck P₁ dem ersten Feinregler 39 als erste Regelgröße X_{1,1} zugeführt wird. Dem Fachmann ergeben sich weitere Möglichkeiten zur Kopplung der zwei Regeleinrichtungen 37, 38.

### Bezugszeichenliste

- 1: Feinregler
- 2: Feinstellglied
- 3: Grobregler
- 4: Grobstellglied
- 5: Prozess
- 6: Membran
- 7: erstes Behältnis
- 8: zweites Behältnis
- 9: erste Regeleinrichtung
- 10: zweite Regeleinrichtung
- 11: erster Feinregler
- 12: zweiter Feinregler
- 13: erstes Feinstellglied
- 14: zweites Feinstellglied
- 15: erster Grobregler
- 16: zweiter Grobregler
- 17: erstes Grobstellglied
- 18: zweites Grobstellglied
- 19: Feinregler
- 20: Feinstellglied
- 21: Prozess
- 22: Zonenregler
- 23: Grobregler
- 24: Grobstellglied
- 25: Regeleinrichtung
- 26: zusätzlicher Regler
- 27: Zonenregler
- 28: Feinregler
- 29: Feinstellglied
- 30: Grobregler
- 31: Grobstellglied
- 32: Verknüpfung
- 33: Prozess
- 34: Membran
- 35: erstes Behältnis
- 36: zweites Behältnis
- 37: erste Regeleinrichtung
- 38: zweite Regeleinrichtung
- 39: erster Feinregler
- 40: zweiter Feinregler
- 41: erstes Feinstellglied
- 42: zweites Feinstellglied
- 43: erster Zonenregler
- 44: zweiter Zonenregler
- 45: erster Grobregler
- 46: zweiter Grobregler
- 47: erstes Grobstellglied
- 48: zweites Grobstellglied

## Patentansprüche

1. Einrichtung zur Regelung des Drucks (P) in einem Prozess **gekennzeichnet durch**
• einen Feinregler (1), **durch** den aus einem Vergleich zwischen einer ersten Führungsgröße (w₁) und einer ersten Regelgröße (x₁) eine erste Stellgröße (y₁) ermittelbar ist, wobei die erste Regelgröße (x₁) von einem gemessenen Wert des zu regelnden Drucks (P) abhängig ist und die erste Führungsgröße (w₁) einen Sollwert für den zu regelnden Druck (P) vorgibt,
• einen Grobregler (3), **durch** den aus einem Vergleich zwischen einer zweiten Führungsgröße (w₂) und einer zweiten Regelgröße (x₂) eine zweite Stellgröße (y₂) ermittelbar ist, wobei die erste Stellgröße (y₁) oder eine von der ersten Stellgröße (y₁) abhängige Größe (y₁') dem Grobregler (3) als zweite Regelgröße (x₂) zuführbar ist und die zweite Führungsgröße (w₂) einen Sollzustand eines Feinstellglieds (2) vorgibt und
• das Feinstellglied (2), dem die erste Stellgröße (y₁) zuführbar ist und ein Grobstellglied (4), dem die zweite Stellgröße (y₂) zuführbar ist, wobei mittels des Feinstellglieds und mittels des Grobstellglieds der zu regelnde Druck (P) beeinflussbar ist.

2. Einrichtung gemäß Anspruch 1, **dadurch gekennzeichnet, dass** der Grobregler (3) ein dynamisches Übertragungsverhalten aufweist, das so gewählt ist, dass eine langsamere Regelung erfolgt, wenn die zweite Regelgröße (x₂) in einem definierten Wertebereich um die zweite Führungsgröße (w₂) liegt, und eine schnellere Regelung erfolgt, wenn die zweite Regelgröße (x₂) außerhalb des Wertebereichs liegt.

3. Einrichtung gemäß einem der Ansprüche 1 oder 2, **dadurch gekennzeichnet, dass** die von der ersten Stellgröße (y₁) abhängige Größe (y₁') eine gemessene Istzustandsgröße des Feinstellglieds (2) oder eine durch Verknüpfung einer gemessenen Istzustandsgröße des Feinstellglieds (2) mit der ersten Stellgröße (y₁) ermittelte Größe ist.

4. Einrichtung gemäß einem der Ansprüche 1 bis 3, **dadurch gekennzeichnet, dass** das Feinstellglied (2) und das Grobstellglied (4) Regelventile mit regelbaren Ventilstellungen zum Regeln eines Drucks sind.

5. Einrichtung gemäß Anspruch 4, **dadurch gekennzeichnet, dass** die zweite Führungsgröße (w₂) so gewählt ist, dass für das als Feinstellglied (2) vorgesehene erste Regelventil eine Sollventilstellung zwischen 5 und 99 % geöffnet vorgegeben ist.

6. Einrichtung gemäß einem der Ansprüche 4 oder 5, **dadurch gekennzeichnet, dass** die Regelventile jeweils einen zugeordneten Stellungsregler aufweisen, dem als Führungsgröße die erste Stellgröße (y₁) beziehungsweise die zweite Stellgröße (y₂) zuführbar ist.

7. Einrichtung zur Regelung des Drucks (P) in einem Prozess, **gekennzeichnet durch**
• einen Feinregler (19, 28), **durch** den aus einem Vergleich zwischen einer ersten Führungsgröße (W₁) und einer ersten Regelgröße (X₁) eine erste Stellgröße (Y₁) ermittelbar ist, wobei die erste Regelgröße (X₁) von einem gemessenen Wert des zu regelnden Drucks (P) abhängig ist und die erste Führungsgröße (W₁) einen Sollwert für den zu regelnden Druck (P) vorgibt,
• einen Zonenregler (22, 27), dem die erste Stellgröße (Y₁) oder eine von der ersten Stellgröße (Y₁) abhängige Größe (Y₁') zuführbar ist und mit dem in Abhängigkeit von der ersten Stellgröße (Y₁) oder der von der ersten Stellgröße (Y₁) abhängigen Größe (Y₁') eine zweite Stellgröße (Y₂) ermittelbar ist, wobei der Zonenregler (22, 27) für erste Stellgrößen (Y₁) oder von ersten Stellgrößen (Y₁) abhängige Größen (Y₁') innerhalb einer Zone zwischen einer vorgegebenen minimalen ersten Größe (Y₁^{min}) und einer vorgegebenen maximalen ersten Größe (Y₁^{max}) ein Zonen-Übertragungsverhalten aufweist, das sich von einem weiteren Übertragungsverhalten für erste Stellgrößen (Y₁) oder von ersten Stellgrößen (Y₁) abhängige Größen (Y₁') außerhalb der Zone unterscheidet,
• gegebenenfalls einen Grobregler (23, 30), **durch** den aus einem Vergleich zwischen einer zweiten Führungsgröße (W₂) und einer zweiten Regelgröße (X₂) eine dritte Stellgröße (Y₃) ermittelbar ist, wobei die zweite Stellgröße (Y₂) dem Grobregler (23, 30) als zweite Führungsgröße (W₂) zuführbar ist und die zweite Regelgröße (X₂) eine gemessene Größe (X_{gem}) ist, **durch** die der zu regelnde Druck (P) beeinflussbar ist, und
• ein Feinstellglied (20, 29), dem die erste Stellgröße (Y₁) zuführbar ist und ein Grobstellglied (24, 31), dem die zweite Stellgröße (Y₂) oder die dritte Stellgröße (Y₃) zuführbar ist, wobei mittels des Feinstellglieds (20, 29) und mittels des Grobstellglieds (24, 31) der zu regelnde Druck (P) beeinflussbar ist.

8. Einrichtung gemäß Anspruch 7, **dadurch gekennzeichnet, dass** die von der ersten Stellgröße (Y₁) abhängige Größe (Y₁') eine gemessene Istzustandsgröße des Feinstellglieds (20, 29) oder eine durch Verknüpfung einer gemessenen Istzustandsgröße des Feinstellglieds (20, 29) mit der ersten Stellgröße (Y₁) ermittelte Größe ist.

9. Einrichtung gemäß einem der Ansprüche 7 oder 8, **dadurch gekennzeichnet, dass** der Zonenregler (22, 27) ein Totzonenregler (GAP-Regler) ist, bei dem für erste Stellgrößen (Y₁) oder von ersten Stellgrößen (Y₁) abhängige Größen (Y₁'), die innerhalb einer Totzone zwischen einer vorgegebenen minimalen ersten Größe (Y₁^{min}) und einer vorgegebenen maximalen ersten Größe (Y₁^{max}) liegen, eine zweite Stellgröße (Y₂) ermittelt wird, die keine Änderung des Zustands des Grobstellglieds (24, 31) hervorruft.

10. Einrichtung gemäß einem der Ansprüche 7 bis 9, **dadurch gekennzeichnet, dass** parallel zu dem Zonenregler (22, 27) ein weiterer Regler (26) geschaltet ist, wobei durch den weiteren Regler (26) aus einem Vergleich zwischen einer dritten Führungsgröße (W₃) und einer dritten Regelgröße (X₃) eine vierte Stellgröße (Y₄) ermittelbar ist, wobei die dritte Führungsgröße (W₃) einen Sollzustand des Feinstellglieds (20, 29) vorgibt, die erste Stellgröße (Y₁) oder die von der ersten Stellgröße (Y₁) abhängige Größe (Y₁') dem weiteren Regler (26) als dritte Regelgröße (X₃) zuführbar ist und aus der vierten Stellgröße (Y₄) und der von dem Zonenregler (22, 27) ermittelten zweiten Stellgröße (Y₂) eine neue zweite Stellgröße (Y₂) ermittelbar ist, die dem Grobstellglied (24, 31) oder ggf. dem Grobregler (23, 30) zuführbar ist.

11. Einrichtung gemäß einem der Ansprüche 7 bis 10, **dadurch gekennzeichnet, dass** das Feinstellglied (20, 29) und das Grobstellglied (24, 31) Regelventile mit regelbaren Ventilstellungen zum Regeln eines Drucks sind.

12. Einrichtung gemäß einem der Ansprüche 7 bis 11, **dadurch gekennzeichnet, dass** die minimale erste Stellgröße (Y₁^{min}) und die maximale erste Stellgröße (Y₁^{max}) so gewählt sind, dass für das Feinstellglied (20, 29) eine Zone in einem Intervall von 5 und 99 % vorgegeben ist.

13. Differenzdruckregelvorrichtung zur Regelung eines Differenzdrucks zwischen mindestens zwei Messorten, umfassend mindestens eine Einrichtung gemäß einem der Ansprüche 1 bis 12, die mit einem der Messorte in Verbindung steht.

14. Differenzdruckregelvorrichtung gemäß Anspruch 13 zur Regelung eines Differenzdrucks zwischen zwei in je einem von zwei Behältnissen (7, 8; 35, 36) angeordneten Messorten, **dadurch gekennzeichnet, dass** die zwei Behältnisse (7, 8; 35, 36) durch eine Membran (6, 34) voneinander getrennt sind.

15. Differenzdruckregelvorrichtung gemäß Anspruch 14, **dadurch gekennzeichnet, dass** die Membran (6, 34) eine lonenaustauschermembran ist und in den Behältnissen (7, 8; 35, 36) eine Chloralkalielektroloyse durchführbar ist, bei der in dem einen Behältnis (7, 35) Chlor und in dem anderen Behältnis (8, 36) Wasserstoff entsteht, wobei mindestens eines der Behältnisse (7, 8; 35, 36) mit zwei Regelventilen mit durch die Differenzdruckregelvorrichtung regelbaren Ventilstellungen als Grobstellglied (17, 18; 47, 48) und als Feinstellglied (13, 14; 41, 42) verbunden ist, über die Chlor oder Wasserstoff abführbar ist.

16. Verfahren zur Regelung eines Drucks (P) in einem Prozess, **gekennzeichnet durch**
• Ermitteln einer ersten Stellgröße (y₁) **durch** einen Feinregler aus einem Vergleich zwischen einer ersten Führungsgröße (w₁), die einen Sollwert für den zu regelnden Druck (P) vorgibt, und einer ersten Regelgröße (x₁), die von einem gemessenen Wert des zu regelnden Drucks (P) abhängig ist,
• Ermitteln einer zweiten Stellgröße (y₂) **durch** einen Grobregler aus einem Vergleich zwischen einer zweiten Führungsgröße (w₂), die einen Sollzustand eines Feinstellglieds vorgibt, und einer zweiten Regelgröße (x₂), wobei die erste Stellgröße (y₁) oder eine von der ersten Stellgröße (y₁) abhängige Größe (y₁') dem Grobregler als zweite Regelgröße (x₂) zugeführt wird und
• Zuführen der ersten Stellgröße (y₁) zu dem Feinstellglied und Zuführen der zweiten Stellgröße (y₂) zu einem Grobstellglied zum Beeinflussen des zu regelnden Drucks (P).

17. Verfahren gemäß Anspruch 16, **dadurch gekennzeichnet, dass** mindestens ein Grob- und ein Feinregler einen Druck (P) bei einem Membranverfahren zur Chloralkalielektrolyse regeln.

18. Verfahren zur Regelung eines Drucks (P) in einem Prozess, **gekennzeichnet durch**
• Ermitteln einer ersten Stellgröße (Y₁) **durch** einen Feinregler aus einem Vergleich zwischen einer ersten Führungsgröße (W₁), die einen Sollwert für den zu regelnden Druck (P) vorgibt, und einer ersten Regelgröße (X₁), die von einem gemessenen Wert des zu regelnden Drucks (P) abhängig ist,
• Ermitteln einer zweiten Stellgröße (Y₂) **durch** einen Zonenregler in Abhängigkeit von der ersten Stellgröße (Y₁) oder von einer von der ersten Stellgröße (Y₁) abhängigen Größe (Y₁'), wobei der Zonenregler für erste Stellgrößen (Y₁) oder von ersten Stellgrößen (Y₁) abhängige Größen (Y₁') innerhalb einer Zone zwischen einer vorgegebenen minimalen ersten Größe (Y₁^{min}) und einer vorgegebenen maximalen ersten Größe (Y₁^{max}) ein Zonen-Übertragungsverhalten aufweist, das sich von einem weiteren Übertragungsverhalten für erste Stellgrößen (Y₁) oder von ersten Stellgrößen (Y₁) abhängige Größen (Y₁') außerhalb der Zone unterscheidet,
• gegebenenfalls Ermitteln einer dritten Stellgröße (Y₃) **durch** einen Grobregler aus einem Vergleich zwischen einer zweiten Führungsgröße (W₂) und einer zweiten Regelgröße (X₂), wobei die zweite Stellgröße (Y₂) dem Grobregler als zweite Führungsgröße (W₂) zugeführt wird und die zweite Regelgröße (X₂) eine gemessene Größe (X_{gem}) ist, **durch** die der zu regelnde Druck (P) beeinflussbar ist, und
• Zuführen der ersten Stellgröße (Y₁) zu einem Feinstellglied und Zuführen der zweiten Stellgröße (Y₂) oder der dritten Stellgröße (Y₃) zu dem Grobstellglied zum Beeinflussen des zu regelnden Drucks (P).

19. Verfahren gemäß Anspruch 18, **dadurch gekennzeichnet, dass** ein parallel zu dem Zonenregler geschalteter weiterer Regler aus einem Vergleich zwischen einer dritten Führungsgröße (W₃) und einer dritten Regelgröße (X₃) eine vierte Stellgröße (Y₄) ermittelt, wobei die dritte Führungsgröße (W₃) einen Sollzustand des Feinstellglieds vorgibt, die erste Stellgröße (Y₁) oder die von der ersten Stellgröße (Y₁) abhängige Größe (Y₁') dem weiteren Regler als dritte Regelgröße (X₃) zugeführt wird und aus der vierten Stellgröße (Y₄) und der von dem Zonenregler ermittelten zweiten Stellgröße (Y₂) eine neue zweite Stellgröße (Y₂) ermittelt wird, die dem Grobstellglied oder ggf. dem Grobregler zugeführt wird.

20. Verfahren gemäß Anspruch 18 oder 19, **dadurch gekennzeichnet, dass** ein Druck (P) bei einem Membranverfahren zur Chloralkalielektrolyse geregelt wird.

## Claims

1. A device for controlling the pressure (P) in a process, **characterized by**
• a fine controller (1) by which a first manipulated variable (y₁) can be determined from a comparison between a first reference variable (w₁) and a first controlled variable (x₁), wherein the first controlled variable (x₁) is dependent on a measured value of the pressure (P) to be controlled and the first reference variable (w₁) specifies a setpoint value for the pressure (P) to be controlled,
• a coarse controller (3) by which a second manipulated variable (y₂) can be determined from a comparison between a second reference variable (w₂) and a second controlled variable (_{X2}), wherein the first manipulated variable (y₁) or a variable (y₁') that is dependent on the first manipulated variable (y₁) can be fed to the coarse controller (3) as the second controlled variable (x₂) and the second reference variable (w₂) specifies a setpoint condition of a fine control element (2) and
• the fine control element (2), to which the first manipulated variable (y₁) can be fed, and a coarse control element (4), to which the second manipulated variable (y₂) can be fed, wherein the pressure (P) to be controlled can be influenced by the fine control element and by the coarse control element.

2. The device according to claim 1, wherein the coarse controller (3) exhibits a dynamic response, selected to effect a slower control when the second controlled variable (x₂) is within a defined value range about the second reference variable (w₂) and to effect a faster control when the second controlled variable (x₂) is outside the value range.

3. The device according to one of claims 1 or 2, wherein the variable (y₁') that is dependent on the first manipulated variable (y₁) is a measured actual state variable of the fine control element (2) or is a variable that is determined by linking a measured actual state variable of the fine control element (2) with the first manipulated variable (y₁).

4. The device according to one of claims 1 to 3, wherein the fine control element (2) and the coarse control element (4) are control valves with controllable valve positions for controlling a pressure.

5. The device according to claim 4, wherein the second reference variable (w₂) is selected so that a setpoint valve position between 5 and 99 % open is specified for the first control valve provided as a fine control element (2).

6. The device according to one of claims 4 or 5, wherein each of the control valves comprises an associated position controller to which the first manipulated variable (y₁) or the second manipulated variable (y₂) can be fed as the reference variable.

7. A device for controlling the pressure (P) in a process, **characterized by**
• a fine controller (19, 28) by which a first manipulated variable (Y₁) can be determined from a comparison between a first reference variable (W₁) and a first controlled variable (X₁), wherein the first controlled variable (X₁) is dependent on a measured value of the pressure (P) to be controlled and the first reference variable (W₁) specifies a setpoint value for the pressure (P) to be controlled,
• a zone controller (22, 27) to which the first manipulated variable (Y₁), or a variable (Y₁') that is dependent on the first manipulated variable (Y₁), can be fed and by means of which a second manipulated variable (Y₂) can be determined in dependence on the first manipulated variable (Y₁) or the variable (Y₁') that is dependent on the first manipulated variable (Y₁), wherein the zone controller (22, 27) exhibits for first manipulated variables (Y₁), or for variables (Y₁') that are dependent on first manipulated variables (Y₁), within a zone between a specified minimum first variable (Y₁^{min}) and a specified maximum first variable (Y₁^{max}) a zone response that is different from another response for first manipulated variables (Y₁), or for variables (Y₁') that are dependent on first manipulated variables (Y₁), outside the zone,
• if necessary, a coarse controller (23, 30) by which a third manipulated variable (Y₃) can be determined from a comparison between a second reference variable (W₂) and a second controlled variable (X₂), wherein the second manipulated variable (Y₂) can be fed to the coarse controller (23, 30) as the second reference variable (W₂) and the second controlled variable (X₂) is a measured variable (X_{gem}) by which the pressure (P) to be controlled can be influenced, and
• a fine control element (20), to which the first manipulated variable (Y₁) can be fed, and a coarse control element (24), to which the second manipulated variable (Y₂) or the third manipulated variable (Y₃) can be fed, wherein the pressure (P) to be controlled can be influenced by the fine control element (20, 29) and by the coarse control element (24, 31).

8. The device according to claim 7, wherein the variable (Y₁') that is dependent on the first manipulated variable (Y₁) is a measured actual state variable of the fine control element (20, 29) or is a variable that is determined by linking a measured actual state variable of the fine control element (20, 29) with the first manipulated variable (Y₁).

9. The device according to one of claims 7 or 8, wherein the zone controller (22, 27) is a dead zone controller (GAP controller) in which, for first manipulated variables (Y₁), or variables (Y₁') that are dependent on first manipulated variables (Y₁), lying within a dead zone between a specified minimum first variable (Y₁^{min}) and a specified maximum first variable (Y₁^{max}), a second manipulated variable (Y₂), which does not cause any change in the state of the coarse control element (24, 31), is determined.

10. The device according to one of claims 7 to 9, wherein another controller (26) is connected in parallel with the zone controller (22, 27), wherein the other controller (26) can determine a fourth manipulated variable (Y₄) from a comparison between a third reference variable (W₃) and a third controlled variable (X₃), wherein the third reference variable (W₃) specifies a setpoint condition of the fine control element (20, 29), the first manipulated variable (Y₁), or the variable (Y₁') that is dependent on the first manipulated variable (Y₁), can be fed to the other controller (26) as the third controlled variable (X₃) and a new second manipulated variable (Y₂) can be determined from the fourth manipulated variable (Y₄) and the second manipulated variable (Y₂) determined by the zone controller (22, 27), and said new variable can be fed to the coarse control element (24, 31) or, if applicable, to the coarse controller (23, 30).

11. The device according to one of claims 7 to 10, wherein the fine control element (20, 29) and the coarse control element (24, 31) are control valves with controllable valve positions for controlling a pressure.

12. The device according to one of claims 7 to 11, wherein the minimum first manipulated variable (Y₁^{min}) and the maximum first manipulated variable (Y₁^{max}) are selected such that a zone in an interval of 5 and 99% is prescribed for the fine control element (20, 29).

13. A differential pressure control device for controlling a differential pressure between at least two measurement locations, comprising at least one device according to one of claims 1 to 12 in connection with one of the measurement locations.

14. The differential pressure control device according to claim 13 for controlling a differential pressure between two measurement locations located in one of two containers (7, 8; 35, 36), respectively, wherein the two containers (7, 8; 35, 36) are separated from one another by a membrane (6, 34).

15. The differential pressure control device according to claim 14, wherein the membrane (6, 34) is an ion exchange membrane and a chloralkali electrolysis can be carried out in the containers (7, 8; 35, 36), with chlorine occurring in one container (7, 35) and hydrogen occurring in the other container (8, 36), wherein at least one of the containers (7, 8; 35, 36) is connected to two control valves as the coarse control element (17, 18; 47, 48) and the fine control element (13, 14; 41, 42), the valves having valve positions that are controllable by way of the differential pressure control device and allowing chlorine or water to be discharged.

16. A method for controlling a pressure (P) in a process, **characterized by**
• determining a first manipulated variable (y₁), using a fine controller, from a comparison between a first reference variable (w₁) that specifies a setpoint value for the pressure (P) to be controlled and a first controlled variable (x₁) that is dependent on a measured value of the pressure (P) to be controlled,
• determining a second manipulated variable (y₂), using a coarse controller, from a comparison between a second reference variable (w₂) that specifies a setpoint condition of a fine control element and a second controlled variable (x₂), wherein the first manipulated variable (y₁), or a variable (y₁') that is dependent on the first manipulated variable (y₁), is fed to the coarse controller as the second controlled variable (x₂) and
• feeding the first manipulated variable (y₁) to the fine control element and feeding the second manipulated variable (y₂) to a coarse control element for influencing the pressure (P) to be controlled.

17. The method according to claim 16, wherein at least one coarse controller and one fine controller control a pressure (P) in a membrane process for chloralkali electrolysis.

18. A method for controlling a pressure (P) in a process, **characterized by**
• determining a first manipulated variable (Y₁), using a fine controller, from a comparison between a first reference variable (W₁) that specifies a setpoint value for the pressure (P) to be controlled and a first controlled variable (X₁) that is dependent on a measured value of the pressure (P) to be controlled,
• determining a second manipulated variable (Y₂), using a zone controller, in dependence on the first manipulated variable (Y₁) or on a variable (Y₁') that is dependent on the first manipulated variable (Y₁), wherein the zone controller exhibits for first manipulated variables (Y₁), or for variables (Y₁') that are dependent on first manipulated variables (Y₁), within a zone between a specified minimum first variable (Y₁^{min}) and a specified maximum first variable (Y₁^{max}) a zone response that is different from another response for first manipulated variables (Y₁), or for variables (Y₁') that are dependent on first manipulated variables (Y₁), outside the zone,
• if necessary, determining a third manipulated variable (Y₃), using a coarse controller, from a comparison between a second reference variable (W₂) and a second controlled variable (X₂), wherein the second manipulated variable (Y₂) is fed to the coarse controller as the second reference variable (W₂) and the second controlled variable (X₂) is a measured variable (X_{gem}) by which the pressure (P) to be controlled can be influenced, and
• feeding the first manipulated variable (Y₁) to a fine control element and feeding the second manipulated variable (Y₂) or the third manipulated variable (Y₃) to the coarse control element for influencing the pressure (P) to be controlled.

19. The method according to claim 18, wherein another controller connected in parallel with the zone controller determines a fourth manipulated variable (Y₄) from a comparison between a third reference variable (W₃) and a third controlled variable (X₃), wherein the third reference variable (W₃) specifies a setpoint condition of the fine control element, the first manipulated variable (Y₁), or the variable (Y₁') that is dependent on the first manipulated variable (Y₁), is fed to the other controller as the third controlled variable (X₃) and a new second manipulated variable (Y₂) is determined from the fourth manipulated variable (Y₄) and the second manipulated variable (Y₂) determined by the zone controller, and said new variable is fed to the coarse control element or, if applicable, to the coarse controller.

20. The method according to claim 18 or 19, wherein a pressure (P) in a membrane process for chloralkali electrolysis is controlled.

## Revendications

1. Dispositif pour réguler la pression (P) dans un processus, **caractérisé par**
* un régulateur de précision (1) par le biais duquel peut être déterminée une première grandeur de commande (y₁) à partir d'une comparaison entre une première grandeur de référence (w₁) et une première grandeur de régulation (x₁), la première grandeur de régulation (x₁) étant dépendante d'une valeur mesurée de la pression (P) à réguler et la première grandeur de référence (w₁) prédéfinissant une valeur de consigne pour la pression (P) à réguler,
* un régulateur approximatif (3) par le biais duquel peut être déterminée une deuxième grandeur de commande (y₂) à partir d'une comparaison entre une deuxième grandeur de référence (w₂) et une deuxième grandeur de régulation (x₂), la première grandeur de commande (y₁) ou une grandeur (y₁') dépendante de la première grandeur de commande (y₁) pouvant être acheminée au régulateur approximatif (3) en tant que deuxième grandeur de régulation (x₂) et la deuxième grandeur de référence (W₂) prédéfinissant un état de consigne d'un actionneur de précision (2) et
* l'actionneur de précision (2), auquel peut être acheminée la première grandeur de commande (y₁), et un actionneur approximatif (4), auquel peut être acheminée la deuxième grandeur de commande (y₂), la pression (P) à réguler pouvant être influencée au moyen de l'actionneur de précision et de l'actionneur approximatif.

2. Dispositif selon la revendication 1, **caractérisé en ce que** le régulateur approximatif (3) présente un comportement de transmission dynamique qui est choisi de telle sorte qu'une régulation plus lente est effectuée lorsque la deuxième grandeur de régulation (x₂) se trouve dans une plage de valeurs définie autour de la deuxième grandeur de référence (w₂) et une régulation plus rapide est effectuée lorsque la deuxième grandeur de régulation (x₂) se trouve à l'extérieur de la plage de valeurs.

3. Dispositif selon l'une des revendications 1 ou 2, **caractérisé en ce que** la grandeur (y₁') dépendante de la première grandeur de commande (y₁) est une grandeur d'état réel mesurée de l'actionneur de précision (2) ou une grandeur déterminée en combinant une grandeur d'état réel mesurée de l'actionneur de précision (2) avec la première grandeur de commande (y₁).

4. Dispositif selon l'une des revendications 1 à 3, **caractérisé en ce que** l'actionneur de précision (2) et l'actionneur approximatif (4) sont des vannes de régulation ayant des positions de vanne réglables pour réguler une pression.

5. Dispositif selon la revendication 4, **caractérisé en ce que** la deuxième grandeur de référence (w₂) est choisie de telle sorte qu'une position de vanne de consigne ouverte entre 5 et 99 % est prédéfinie pour la première vanne de régulation prévue en tant qu'actionneur de précision (2).

6. Dispositif selon l'une des revendications 4 ou 5, **caractérisé en ce que** les vannes de régulation présentent respectivement un régulateur de position associé auquel peut être acheminée, en tant que grandeur de référence, la première grandeur de commande (y₁) ou la deuxième grandeur de commande (y₂).

7. Dispositif pour réguler la pression (P) dans un processus, **caractérisé par**
* un régulateur de précision (19, 28) par le biais duquel peut être déterminée une première grandeur de commande (Y₁) à partir d'une comparaison entre une première grandeur de référence (W₁) et une première grandeur de régulation (x₁), la première grandeur de régulation (X₁) étant dépendante d'une valeur mesurée de la pression (P) à réguler et la première grandeur de référence (W₁) prédéfinissant une valeur de consigne pour la pression (P) à réguler,
* un régulateur de zone (22, 27), auquel peut être acheminée la première grandeur de commande (Y₁) ou une grandeur (Y₁') dépendante de la première grandeur de commande (Y₁) et par le biais duquel peut être déterminée une deuxième grandeur de commande (Y₂) en fonction de la première grandeur de commande (Y₁ ou de la grandeur (Y₁') dépendante de la première grandeur de commande (Y₁), le régulateur de zone (22, 27) présentant, pour des premières grandeurs de commande (Y₁) ou des grandeurs (Y₁') dépendantes des premières grandeurs de commande (Y₁) à l'intérieur d'une zone entre une première grandeur minimale (Y₁^{min}) prédéfinie et une première grandeur maximale (Y₁^{max}) prédéfinie, un comportement de transmission de zone qui se différencie d'un autre comportement de transmission pour des premières grandeurs de commande (Y₁) ou des grandeurs (Y₁') dépendantes des premières grandeurs de commande (Y₁) en dehors de la zone,
* le cas échéant, un régulateur approximatif (23, 30) par le biais duquel peut être déterminée une troisième grandeur de commande (Y₃) à partir d'une comparaison entre une deuxième grandeur de référence (W₂) et une deuxième grandeur de régulation (X₂), la deuxième grandeur de commande (Y₂) pouvant être acheminée au régulateur approximatif (23, 30) en tant que deuxième grandeur de référence (W₂) et la deuxième grandeur de régulation (X₂) étant une grandeur mesurée (X_{gem}) par le biais de laquelle peut être influencée la pression (P) à réguler, et
* un actionneur de précision (20, 29), auquel peut être acheminée la première grandeur de commande (Y₁), et un actionneur approximatif (24, 31), auquel peut être acheminée la deuxième grandeur de commande (Y₂) ou la troisième grandeur de commande (Y₃), la pression (P) à réguler pouvant être influencée au moyen de l'actionneur de précision (20, 29) et de l'actionneur approximatif (24, 31).

8. Dispositif selon la revendication 7, **caractérisé en ce que** la grandeur (Y₁') dépendante de la première grandeur de commande (Y₁) est une grandeur d'état réel mesurée de l'actionneur de précision (20, 29) ou une grandeur déterminée en combinant une grandeur d'état réel mesurée de l'actionneur de précision (20, 29) avec la première grandeur de commande (Y₁).

9. Dispositif selon l'une des revendications 7 ou 8, **caractérisé en ce que** le régulateur de zone (22, 27) est un régulateur à zone neutre (régulateur GAP) avec lequel une deuxième grandeur de commande (Y₂) est déterminée pour des premières grandeurs de commande (Y₁) ou des grandeurs (Y₁') dépendantes des premières grandeurs de commande (Y₁) qui se trouvent à l'intérieur d'une zone neutre entre une première grandeur minimale (Y₁^{min}) prédéfinie et une première grandeur maximale (Y₁^{max}) prédéfinie, laquelle ne provoque aucune modification de l'état de l'actionneur approximatif (24, 31).

10. Dispositif selon l'une des revendications 7 à 9, **caractérisé en ce qu'**un régulateur supplémentaire (26) est branché en parallèle avec le régulateur de zone (22, 27), une quatrième grandeur de commande (Y₄) pouvant être déterminée par le régulateur supplémentaire (26) à partir d'une comparaison entre une troisième grandeur de référence (W₃) et une troisième grandeur de régulation (X₃), la troisième grandeur de référence (W₃) prédéfinissant un état de consigne de l'actionneur de précision (20, 29), la première grandeur de commande (Y₁) ou la grandeur (Y₁') dépendante de la première grandeur de commande (Y₁) pouvant être acheminée au régulateur supplémentaire (26) en tant que troisième grandeur de régulation (X₃) et une nouvelle deuxième grandeur de commande (Y₂) pouvant être déterminée à partir de la quatrième grandeur de commande (Y₄) et de la deuxième grandeur de commande (Y₂) déterminée par le régulateur de zone (22, 27), laquelle peut être acheminée à l'actionneur approximatif (24, 31) ou éventuellement au régulateur approximatif (23, 30).

11. Dispositif selon l'une des revendications 7 à 10, **caractérisé en ce que** l'actionneur de précision (20, 29) et l'actionneur approximatif (24, 31) sont des vannes de régulation ayant des positions de vanne réglables pour réguler une pression.

12. Dispositif selon l'une des revendications 7 à 11, **caractérisé en ce que** la première grandeur de commande minimale (Y₁^{min}) et la première grandeur de commande maximale (Y₁^{max}) sont choisies de telle sorte qu'une zone dans un intervalle de 5 à 99 % est prédéfinie pour l'actionneur de précision (20, 29).

13. Dispositif de régulation de la pression différentielle destiné à réguler une pression différentielle entre au moins deux points de mesure, comprenant au moins un dispositif selon l'une des revendications 1 à 12 qui est en liaison avec l'un des points de mesure.

14. Dispositif de régulation de la pression différentielle selon la revendication 13 pour réguler une pression différentielle entre deux points de mesure disposés à chaque fois dans un parmi deux récipients (7, 8 ; 35, 36), **caractérisé en ce que** les deux récipients (7, 8 ; 35, 36) sont séparés l'un de l'autre par une membrane (6, 34).

15. Dispositif de régulation de la pression différentielle selon la revendication 14, **caractérisé en ce que** la membrane (6, 34) est une membrane d'échange d'ions et une électrolyse chlore-alcaline peut être effectuée dans les récipients (7, 8 ; 35, 36), au cours de laquelle du chlore est produit dans un récipient (7, 35) et de l'hydrogène dans l'autre récipient (8, 36), au moins l'un des récipients (7, 8 ; 35, 36) étant relié avec deux vannes de régulation, lesquelles possèdent des positions de vanne réglables par le dispositif de régulation de la pression différentielle et font office d'actionneur approximatif (17, 18 ; 47, 48) et d'actionneur de précision (13, 14 ; 41, 42), par le biais desquelles peut être évacué le chlore ou l'hydrogène.

16. Procédé pour réguler la pression (P) dans un processus, **caractérisé par**
* la détermination d'une première grandeur de commande (y₁) par le biais d'un régulateur de précision à partir d'une comparaison entre une première grandeur de référence (w₁), laquelle prédéfinit une valeur de consigne pour la pression (P) à réguler, et une première grandeur de régulation (x₁), laquelle est dépendante d'une valeur mesurée de la pression (P) à réguler,
* la détermination d'une deuxième grandeur de commande (y₂) par le biais d'un régulateur approximatif à partir d'une comparaison entre une deuxième grandeur de référence (w₂), laquelle prédéfinit un état de consigne d'un actionneur de précision, et une deuxième grandeur de régulation (x₂), la première grandeur de commande (y₁) ou une grandeur (y₁') dépendante de la première grandeur de commande (y₁) étant acheminée au régulateur approximatif en tant que deuxième grandeur de régulation (x₂) et
* l'acheminement de la première grandeur de commande (y₁) à l'actionneur de précision et l'acheminement de la deuxième grandeur de commande (y₂) à un actionneur approximatif pour influencer la pression (P) à réguler.

17. Procédé selon la revendication 16, **caractérisé en ce qu'**au moins un régulateur approximatif et un régulateur de précision régulent une pression (P) lors d'un procédé à membrane destiné à l'électrolyse chlore-alcaline.

18. Procédé pour réguler la pression (P) dans un processus, **caractérisé par**
* la détermination d'une première grandeur de commande (Y₁) par le biais d'un régulateur de précision à partir d'une comparaison entre une première grandeur de référence (W₁), laquelle prédéfinit une valeur de consigne pour la pression (P) à réguler, et une première grandeur de régulation (X₁), laquelle est dépendante d'une valeur mesurée de la pression (P) à réguler,
* la détermination d'une deuxième grandeur de commande (Y₂) par le biais d'un régulateur de zone en fonction de la première grandeur de commande (Y₁) ou d'une grandeur (Y₁') dépendante de la première grandeur de commande (Y₁), le régulateur de zone présentant, pour des premières grandeurs de commande (Y₁) ou des grandeurs (Y₁') dépendantes des premières grandeurs de commande (Y₁) à l'intérieur d'une zone entre une première grandeur minimale (Y₁^{min}) prédéfinie et une première grandeur maximale (Y₁^{max}) prédéfinie, un comportement de transmission de zone qui se différencie d'un autre comportement de transmission pour des premières grandeurs de commande (Y₁) ou des grandeurs (Y₁') dépendantes des premières grandeurs de commande (Y₁) en dehors de la zone,
* le cas échéant, la détermination d'une troisième grandeur de commande (Y₃) par le biais d'un régulateur approximatif à partir d'une comparaison entre une deuxième grandeur de référence (W₂) et une deuxième grandeur de régulation (X₂), la deuxième grandeur de commande (Y₂) étant acheminée au régulateur approximatif en tant que deuxième grandeur de référence (W₂) et la deuxième grandeur de régulation (X₂) étant une grandeur mesurée (X_{gem}) par le biais de laquelle peut être influencée la pression (P) à réguler, et
* l'acheminement de la première grandeur de commande (Y₁) à un actionneur de précision et l'acheminement de la deuxième grandeur de commande (Y₂) ou de la troisième grandeur de commande (Y₃) à l'actionneur approximatif pour influencer la pression (P) à réguler.

19. Procédé selon la revendication 18, **caractérisé en ce qu'**un régulateur supplémentaire branché en parallèle avec le régulateur de zone détermine une quatrième grandeur de commande (Y₄) à partir d'une comparaison entre une troisième grandeur de référence (W₃) et une troisième grandeur de régulation (X₃), la troisième grandeur de référence (W₃) prédéfinissant un état de consigne de l'actionneur de précision, la première grandeur de commande (Y₁) ou la grandeur (Y₁' ) dépendante de la première grandeur de commande (Y₁) étant acheminée au régulateur supplémentaire en tant que troisième grandeur de régulation (X₃) et une nouvelle deuxième grandeur de commande (Y₂) étant déterminée à partir de la quatrième grandeur de commande (Y₄) et de la deuxième grandeur de commande (Y₂) déterminée par le régulateur de zone, laquelle est acheminée à l'actionneur approximatif ou éventuellement au régulateur approximatif.

20. Procédé selon la revendication 18 ou 19, **caractérisé en ce qu'**une pression (P) lors d'un procédé à membrane destiné à l'électrolyse chlore-alcaline est régulée.
